# EUROPEAN PATENT SPECIFICATION

(11) **EP 3 304 904 B1**
(45) Date of publication and mention of the grant of the patent: **26.01.2022**
(21) Application number: 16802635.9
(22) Date of filing: 31.05.2016
(51) Int. Cl.: H04N 19/30, H04N 21/854, H04N 21/43, H04N 21/23, H04N 21/8543, H04N 19/70, H04N 21/2343, H04N 21/236, H04N 21/434, H04N 21/4402, H04N 21/63, H04N 21/81, H04N 21/845

(54) **A METHOD, AN APPARATUS, A COMPUTER PROGRAM FOR VIDEO CODING**
VERFAHREN, VORRICHTUNG UND COMPUTERPROGRAMM ZUR VIDEOCODIERUNG
PROCÉDÉ, APPAREIL, PROGRAMME INFORMATIQUE POUR CODAGE VIDÉO

(30) Priority: 03.06.2015 GB 201509569
(43) Date of publication of application: 11.04.2018
(73) Proprietor: Nokia Technologies Oy, 02610 Espoo (FI)
(72) Inventor: HANNUKSELA, Miska, 36110 Tampere (FI); AKSU, Emre, 33800 Tampere (FI)
(74) Representative: Nokia EPO representatives
(86) International application number: PCT/FI2016/050380
(87) International publication number: WO 2016/193543

(56) References cited:
- WO-A1-2012/094171
- WO-A1-2015/011915
- WO-A1-2015/012226
- US-A1- 2002 021 758
- US-A1- 2005 254 072
- US-A1- 2006 092 938
- US-A1- 2012 194 519
- US-A1- 2013 022 114
- US-A1- 2013 191 550
- US-A1- 2013 243 391
- US-A1- 2014 089 778
- US-A1- 2014 089 778
- US-A1- 2014 359 154
- US-B1- 7 206 804
- HANNUKSELA M M ET AL: "Optional MIME parameters for ISO/IEC 23008-12", 111. MPEG MEETING; 6-2-2015 - 20-2-2015; GENEVA; (MOTION PICTURE EXPERT GROUP OR ISO/IEC JTC1/SC29/WG11),, no. m35830, 19 February 2015 (2015-02-19), XP030064198,
- "Text of ISO/IEC DIS 23008-12 Carriage of Still Image and Image Sequences", 109. MPEG MEETING;7-7-2014 - 11-7-2014; SAPPORO; (MOTION PICTURE EXPERT GROUP OR ISO/IEC JTC1/SC29/WG11),, no. N14642, 4 August 2014 (2014-08-04), XP030021380,
- HANNUKSELA M M ET AL: "On brand specifications for the Image File Format (ISO/IEC 23008-12)", 111. MPEG MEETING; 6-2-2015 - 20-2-2015; GENEVA; (MOTION PICTURE EXPERT GROUP OR ISO/IEC JTC1/SC29/WG11),, no. m35829, 11 February 2015 (2015-02-11), XP030064197,

## Description

### TECHNICAL FIELD

The present application relates to progressive refinement and caching improvement of scalably coded images.

### BACKGROUND

This section is intended to provide a background or context to the invention that is recited in the claims. The description herein may include concepts that could be pursued, but are not necessarily ones that have been previously conceived or pursued.

High Efficiency Image File Format (HEIF) is a standard developed by the Moving Picture Experts Group (MPEG) for storage of images and image sequences. The standard facilitates file encapsulation of data coded according to High Efficiency Video Coding (HEVC) standard. HEIF includes features building on top of the used ISO Base Media File Format (ISOBMFF). US patent application 2014/089778 discloses architectures and techniques for providing an initial portion of media content of a network site to a user equipment. In particular one such technique comprises embedding an initial portion of the media content within hypertext markup language (HTML) for displaying a page of the network site. US patent application 2013/191550 discloses techniques for referencing base layer data and enhancement layer data from a metadata file, in which either or both the base layer and enhancement layer are external to the metadata file. Optional MIME parameters for ISO/IEC 23008-12 from the 111. MPEG meeting 6-2-2015 to 20-2-2015; Geneva: (Motion Picture Expert Group or ISO/IEC JTC1/SC29/WG11) discloses the MIME parameters required in order to determine whether a media player is capable of constructing a derived image.

### SUMMARY

Some examples provide a method for encoding and decoding video information.

Various aspects of examples of the invention are provided in the detailed description.

According to a first aspect, there is provided a method for providing for a progressive refinement of a scalable image content of a high efficiency file format (HEIF) comprising: obtaining a coded base layer image of the scalable image and a coded enhancement layer image of the scalable image, wherein the coded enhancement layer image depends on the coded base layer image; determining that, in the case that a decoded enhancement layer image is to be displayed, a decoded base layer image can be displayed first; and in response to said determination: indicating, in the HTML 5 code, that in the case of the second HEIF container file is to be displayed, the base layer image of the first HEIF container file can be displayed prior to the enhancement layer image of the second HEIF container file to achieve progressive refinement; including the coded base layer image into a first HEIF container file and including the coded enhancement layer image into a second HEIF container file, wherein the method is characterized in that the response to said determination further comprises; indicating, in a hyper-text markup language (HTML 5) code, that the first HEIF container file and the second HEIF container file are alternatives; and indicating, in the HTML 5 code, that the second HEIF container file depends on the first HEIF container file.

According to a second aspect, there is provided a method for displaying of a progressive refinement of a scalable image content of a high efficiency file format (HEIF) comprising: parsing, from a hyper-text markup language (HTML 5) code, that a first HEIF container file and a second HEIF container file are alternatives; determining to display the second HEIF container file; parsing, from the HTML 5 code, that the second HEIF container file depends on the first HEIF container file; parsing, from the HTML 5 code, that in the case an enhancement image from the second HEIF container file is to be displayed, a base layer image from the first HEIF container file is displayed prior to the displaying of the enhancement image; requesting the first HEIF container file; decoding a base layer image from the first HEIF container file; requesting the second HEIF container file; decoding an enhancement layer image from the second HEIF container file; displaying the decoded base layer image from the first HEIF container file prior to displaying the decoded enhancement layer image from the second HEIF container file; and displaying the decoded enhancement layer image from the second HEIF container file

According to a third aspect, there is provided an apparatus for providing for a progressive refinement of a scalable image content of a high efficiency file format (HEIF) comprising means for obtaining a coded base layer image of the scalable image and a coded enhancement layer image of the scalable image, wherein the coded enhancement layer image depends on the coded base layer image; means for determining that, in the case that a decoded enhancement layer image is to be displayed, a decoded base layer image can be displayed first; and in response to said determination: means for indicating, in the HTML 5 code, that in the case of the second HEIF container file is to be displayed, the base layer image of the first HEIF container file can be displayed prior to the enhancement layer image of the second HEIF container file to achieve progressive refinement; means for including the coded base layer image into a first HEIF container file and including the coded enhancement layer image into a second HEIF container file, wherein the apparatus is characterized in that the response to said determination further comprises; means for indicating, in a hyper-text markup language (HTML 5) code, that the first HEIF container file and the second HEIF container file are alternatives; and means for indicating, in the HTML 5 code, that the second HEIF container file depends on the first HEIF container file.

According to a fourth aspect, there is provided An apparatus for displaying of a progressive refinement of a scalable image content of a high efficiency file format (HEIF) comprising: means for parsing, from a hyper-text markup language (HTML 5) code, that a first HEIF container file and a second HEIF container file are alternatives; means for determining to display the second HEIF container file; means for parsing, from the HTML 5 code, that the second HEIF container file depends on the first HEIF container file; means for parsing, from the HTML 5 code, that in the case an enhancement image from the second HEIF container file is to be displayed, a base layer image from the first HEIF container file is displayed prior to the displaying of the enhancement image; means for requesting the first HEIF container file; means for decoding a base layer image (830) from the first HEIF container file; means for requesting the second HEIF container file; means for decoding an enhancement layer image from the second HEIF container file; means for displaying the decoded base layer image from the first HEIF container file prior to displaying the decoded enhancement layer image from the second HEIF container file; and means for displaying the decoded enhancement layer image from the second HEIF container file.

According to a fifth aspect, there is provided a computer program product for providing for a progressive refinement of a scalable image content of a high efficiency file format (HEIF) embodied on a non-transitory computer readable medium, comprising computer program code configured to, when executed on at least one processor, cause an apparatus or a system to: to obtain a coded base layer image of the scalable image and a coded enhancement layer image of the scalable image, wherein the coded enhancement layer image depends on the coded base layer image;
to determine that, in the case that a decoded enhancement layer image is to be displayed, a decoded base layer image can be displayed first; and in response to said determination: to indicate, in the HTML 5 code, that in the case of the second HEIF container file is to be displayed, the base layer image of the first HEIF container file can be displayed prior to the enhancement layer image of the second HEIF container file to achieve progressive refinement; to include the coded base layer image into a first HEIF container file and including the coded enhancement layer image into a second HEIF container file, wherein the computer program product is characterized in that the response to said determination further comprises; to indicate, in a hyper-text markup language (HTML 5) code, that the first HEIF container file and the second HEIF container file are alternatives; and to indicate, in the HTML 5 code, that the second HEIF container file depends on the first HEIF container file.

### BRIEF DESCRIPTION OF THE DRAWINGS

For a more complete understanding of example embodiments of the present invention, reference is now made to the following descriptions taken in connection with the accompanying drawings in which:
Figure 1 illustrates a block diagram of a video coding system according to an example;
Figure 2 illustrates a layout of an apparatus according to an example;
Figure 3 illustrates an arrangement for video coding comprising a plurality of apparatuses, networks and network elements according to an example;
Figure 4 illustrates a block diagram of a video encoder according to an example;
Figure 5 illustrates a block diagram of a video decoder according to an example;
Figure 6 illustrates an origin server, a cache and client devices according to an example;
Figure 7 illustrates an example of a method of the related art;
Figure 8 illustrates an example of a method according to an example;
Figure 9 is a flowchart illustrating an example of a method; and
Figure 10 is a flowchart illustrating another example of a method.

### DETAILED DESCRIPTON OF SOME EXAMPLE EMBODIMENTS

The present application relates to video related business including creation, delivery and playback of video data. Video codecs are nowadays an integral part of many consumer devices, e.g. high-end smartphones, digital still cameras, and television sets.

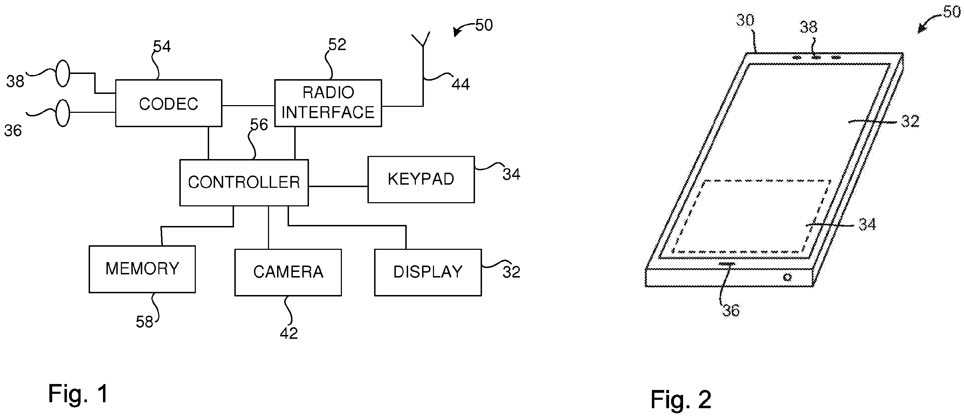

An example of such consumer device is illustrated in Figures 1 and 2. The apparatus 50 is an electronic device for example a mobile terminal or a user equipment of a wireless communication system or a camera device. The apparatus 50 may comprise a housing 30 for incorporating and protecting the device. The apparatus 50 further may comprise a display 32, for example, a liquid crystal display or any other display technology capable of displaying images and/or videos. The apparatus 50 may further comprise a keypad 34. According to another example, any suitable data or user interface mechanism may be employed. For example, the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device, which may be any of the following: an earpiece 38, a speaker or an analogue audio or digital audio output connection. The apparatus 50 may also comprise a battery (according to another embodiment, the device may be powered by any suitable mobile energy device, such as solar cell, fuel cell or clockwork generator). The apparatus may comprise a camera 42 capable of recording or capturing images and/or video, or may be connected to one. According to an embodiment, the apparatus 50 may further comprise an infrared port for short range line of sight communication to other devices. According to an embodiment, the apparatus 50 may further comprise any suitable short range communication solution such as for example a Bluetooth wireless connection or a USB/firewire wired solution.

The apparatus 50 may comprise a controller 56 or processor for controlling the apparatus. The controller 56 may be connected to memory 58 which, according to an example, may store both data in the form of image and audio data and/or may also store instructions for implementation on the controller 56. The controller 56 may further be connected to video codec circuitry 54 suitable for carrying out coding and decoding or audio and/or video data or assisting in encoding and/or decoding carried out by the controller 56.

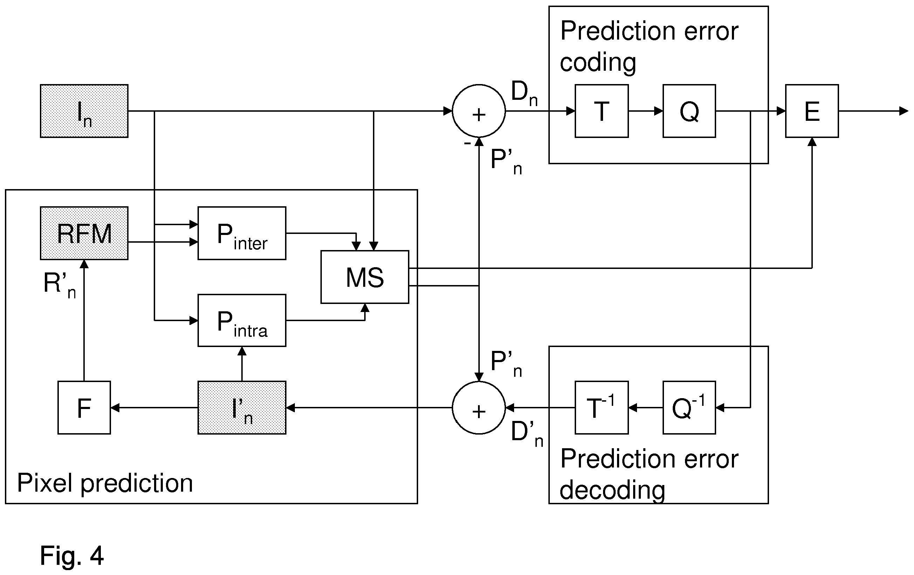

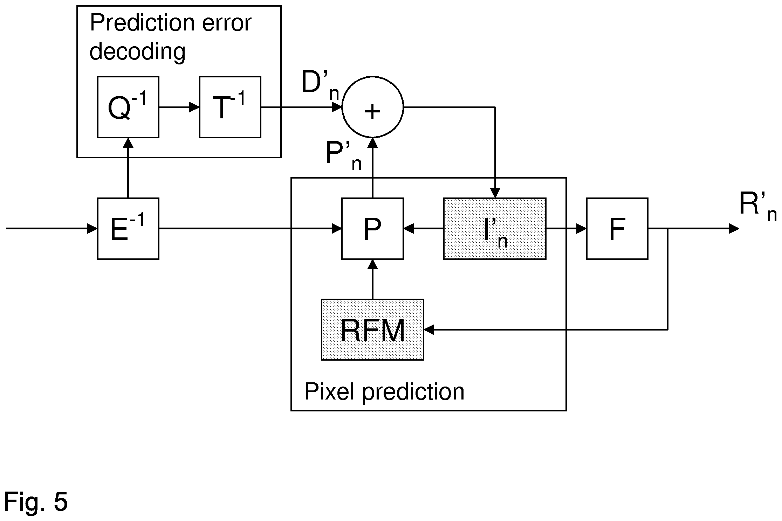

A video codec circuitry 54 may comprise an encoder that transforms the input video into a compressed representation suited for storage/transmission, and a decoder is able to uncompress the compressed video representation back into a viewable form. The encoder may discard some information in the original video sequence in order to represent the video in more compact form (i.e. at lower bitrate). Figure 4 illustrates an example of a video encoder, where **Iₙ:** Image to be encoded; **P'ₙ:** Predicted representation of an image block; Dn: Prediction error signal; **D'ₙ:** Reconstructed prediction error signal; **I'ₙ:** Preliminary reconstructed image; **R'ₙ:** Final reconstructed image ; T, **T₋₁**: Transform and inverse transform; **Q, Q₋₁:** Quantization and inverse quantization; E: Entropy encoding; RFM: Reference frame memory; **Pᵢₙₜₑᵣ**: Inter prediction; **Pᵢₙₜᵣₐ**: Intra prediction; MS: Mode selection; F: Filtering. Figure 5 illustrates a block diagram of a video decoder where **P'ₙ:** Predicted representation of an image block; **D'n:** Reconstructed prediction error signal; **I'ₙ:** Preliminary reconstructed image; **R'ₙ:** Final reconstructed image; **T₋₁:** Inverse transform; **Q₋₁:** Inverse quantization; **E₋₁**: Entropy decoding; **RFM:** Reference frame memory; **P:** Prediction (either inter or intra); **F:** Filtering. In some examples, the apparatus 50 (Figures 1 and 2) comprises only an encoder or a decoder, is some other examples the apparatus 50 comprises both.

Referring again to Figures 1 and 2. The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

According to an example, the apparatus 50 comprises a camera 42 capable of recording or detecting individual frames which are then passed to the codec 54 or controller for processing. According to an example, the apparatus may receive the video image data for processing from another device prior to transmission and/or storage. According to an example, the apparatus 50 may receive the images for processing either wirelessly or by a wired connection.

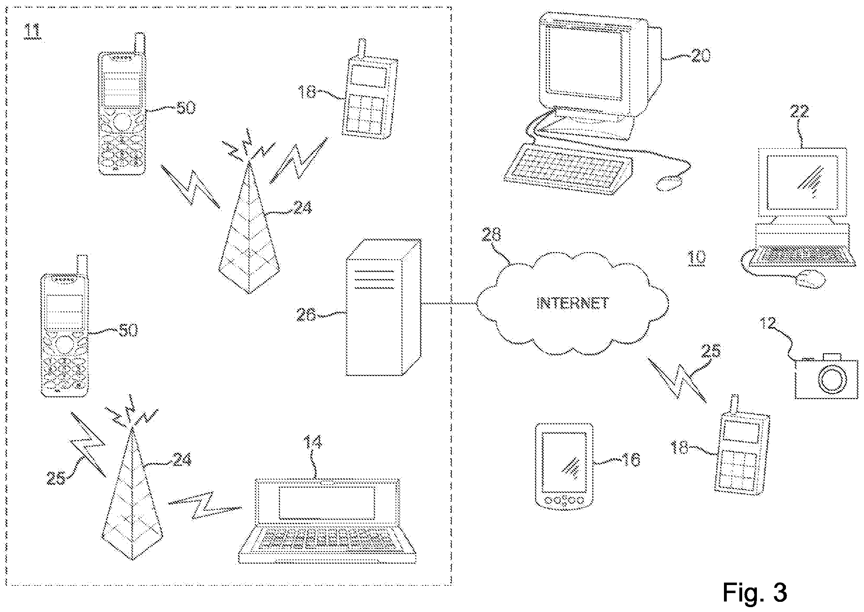

Figure 3 shows a system configuration comprising a plurality of apparatuses, networks and network elements according to an example, The system 10 comprises multiple communication devices which can communicate through one or more networks. The system 10 may comprise any combination of wired or wireless networks including, but not limited to a wireless cellular telephone network (such as a GSM, UMTS, CDMA network, etc.), a wireless local area network (WLAN), such as defined by any of the IEEE 802.x standards, a Bluetooth personal area network, an Ethernet local area network, a token ring local area network, a wide area network, and the internet.

The system 10 may include both wired and wireless communication devices or apparatus 50 suitable for implementing present examples. . For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include but are not limited to, an electronic device or apparatus 50, a combination of a personal digital assistant (PDA) and a mobile telephone 14, a PDA 16, an integrated messaging device (IMD) 18, a desktop computer 20, a notebook computer 22, a digital camera 12. The apparatus 50 may be stationary or mobile when carried by an individual who is moving. The apparatus 50 may also be located in a mode of transport.

Some of further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telephone system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio infrared, laser, cable connections or any suitable connection.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

Version 1 of the High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Version 2 of H.265/HEVC included scalable, multiview, and fidelity range extensions, which may be abbreviated SHVC, MV-HEVC, and REXT, respectively. Version 2 of H.265/HEVC was published as ITU-T Recommendation H.265 (10/2014) and as Edition 2 of ISO/IEC 23008-2. There are currently ongoing standardization projects to develop further extensions to H.265/HEVC, including three-dimensional and screen content coding extensions, which may be abbreviated 3D-HEVC and SCC, respectively.

SHVC, MV-HEVC, and 3D-HEVC use a common basis specification, specified in Annex F of the version 2 of the HEVC standard. This common basis comprises for example high-level syntax and semantics e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

Some key definitions, bitstream and coding structures, and concepts of are described in this section as an example of encoder, decoder, encoding method, decoding method, and a bitstream structure for pictures and picture sequences, wherein the embodiments may be implemented. The aspects of the invention are not limited to HEVC, but rather the description is given for one possible basis on top of which the invention may be partly or fully realized.

Similarly to many earlier video coding standards, the bitstream syntax and semantics as well as the decoding process for error-free bitstreams are specified in H.264/AVC and HEVC. The encoding process is not specified, but encoders must generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

In the description of existing standards as well as in the description of examples, a syntax element may be defined as an element of data represented in the bitstream. A syntax structure may be defined as zero or more syntax elements present together in the bitstream in a specified order. In the description of existing standards as well as in the description of examples, a phrase "by external means" or "through external means" may be used. For example, an entity, such as a syntax structure or a value of a variable used in the decoding process, may be provided "by external means" to the decoding process. The phrase "by external means" may indicate that the entity is not included in the bitstream created by the encoder, but rather conveyed externally from the bitstream for example using a control protocol. It may alternatively or additionally mean that the entity is not created by the encoder, but may be created for example in the player or decoding control logic or alike that is using the decoder. The decoder may have an interface for inputting the external means, such as variable values.

The elementary unit for the input to an H.264/AVC or HEVC encoder and the output of an H.264/AVC or HEVC decoder, respectively, is a picture. A picture given as an input to an encoder may also be referred to as a source picture, and a picture decoded by a decoded may be referred to as a decoded picture.

The source and decoded pictures are each comprised of one or more sample arrays, such as one of the following sets of sample arrays:
- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g. in a coded bitstream e.g. using the Video Usability Information (VUI) syntax of H.264/AVC and/or HEVC. A component may be defined as an array or single sample from one of the three sample arrays arrays (luma and two chroma) or the array or a single sample of the array that compose a picture in monochrome format.

In H.264/AVC and HEVC, a picture may either be a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays. Chroma formats may be summarized as follows:
- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

In H.264/AVC and HEVC, it is possible to code sample arrays as separate color planes into the bitstream and respectively decode separately coded color planes from the bitstream. When separate color planes are in use, each one of them is separately processed (by the encoder and/or the decoder) as a picture with monochrome sampling.

An elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A NAL unit may be defined as a syntax structure containing an indication of the type of data to follow and bytes containing that data in the form of an RBSP interspersed as necessary with startcode emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0. NAL units consist of a header and payload.

In HEVC, a two-byte NAL unit header is used for all specified NAL unit types. The NAL unit header contains one reserved bit, a six-bit NAL unit type indication, a three-bit nuh_temporal_id_plus1 indication for temporal level (may be required to be greater than or equal to 1) and a six-bit nuh_layer_id syntax element. The temporal_id_plus1 syntax element may be regarded as a temporal identifier for the NAL unit, and a zero-based TemporalId variable may be derived as follows: TemporalId = temporal_id_plus1 - 1. TemporalId equal to 0 corresponds to the lowest temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to TID does not use any picture having a TemporalId greater than TID as inter prediction reference. A sub-layer or a temporal sub-layer may be defined to be a temporal scalable layer of a temporal scalable bitstream, consisting of VCL NAL units with a particular value of the TemporalId variable and the associated non-VCL NAL units. nuh layer id can be understood as a scalability layer identifier.

Scalable video coding may refer to coding structure where one bitstream can contain multiple representations of the content, for example, at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A meaningful decoded representation can be produced by decoding only certain parts of a scalable bit stream. A scalable bitstream typically consists of a "base layer" providing the lowest quality video available and one or more enhancement layers that enhance the video quality when received and decoded together with the lower layers. In order to improve coding efficiency for the enhancement layers, the coded representation of that layer typically depends on the lower layers. E.g. the motion and mode information of the enhancement layer can be predicted from lower layers. Similarly the pixel data of the lower layers can be used to create prediction for the enhancement layer.

In some scalable video coding schemes, a video signal can be encoded into a base layer and one or more enhancement layers. An enhancement layer may enhance, for example, the temporal resolution (i.e., the frame rate), the spatial resolution, or simply the quality of the video content represented by another layer or part thereof. Each layer together with all its dependent layers is one representation of the video signal, for example, at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

Scalability modes or scalability dimensions may include but are not limited to the following:
- Quality scalability: Base layer pictures are coded at a lower quality than enhancement layer pictures, which may be achieved for example using a greater quantization parameter value (i.e., a greater quantization step size for transform coefficient quantization) in the base layer than in the enhancement layer.
- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.
- Bit-depth scalability: Base layer pictures are coded at lower bit-depth (e.g. 8 bits) than enhancement layer pictures (e.g. 10 or 12 bits).
- Dynamic range scalability: Scalable layers represent a different dynamic range and/or images obtained using a different tone mapping function and/or a different optical transfer function.
- Chroma format scalability: Base layer pictures provide lower spatial resolution in chroma sample arrays (e.g. coded in 4:2:0 chroma format) than enhancement layer pictures (e.g. 4:4:4 format).
- Color gamut scalability: enhancement layer pictures have a richer/broader color representation range than that of the base layer pictures - for example the enhancement layer may have UHDTV (ITU-R BT.2020) color gamut and the base layer may have the ITU-R BT.709 color gamut.
- View scalability, which may also be referred to as multiview coding. The base layer represents a first view, whereas an enhancement layer represents a second view.
- Depth scalability, which may also be referred to as depth-enhanced coding. A layer or some layers of a bitstream may represent texture view(s), while other layer or layers may represent depth view(s).
- Region-of-interest scalability (as described below).
- Interlaced-to-progressive scalability (also known as field-to-frame scalability): coded interlaced source content material of the base layer is enhanced with an enhancement layer to represent progressive source content.
- Hybrid codec scalability (also known as coding standard scalability): In hybrid codec scalability, the bitstream syntax, semantics and decoding process of the base layer and the enhancement layer are specified in different video coding standards. Thus, base layer pictures are coded according to a different coding standard or format than enhancement layer pictures. For example, the base layer may be coded with H.264/AVC and an enhancement layer may be coded with an HEVC multi-layer extension.

It should be understood that many of the scalability types may be combined and applied together. For example color gamut scalability and bit-depth scalability may be combined.

The term layer may be used in context of any type of scalability, including view scalability and depth enhancements. An enhancement layer may refer to any type of an enhancement, such as SNR, spatial, multiview, depth, bit-depth, chroma format, and/or color gamut enhancement. A base layer may refer to any type of a base video sequence, such as a base view, a base layer for SNR/spatial scalability, or a texture base view for depth-enhanced video coding.

Various technologies for providing three-dimensional (3D) video content are currently investigated and developed. It may be considered that in stereoscopic or two-view video, one video sequence or view is presented for the left eye while a parallel view is presented for the right eye. More than two parallel views may be needed for applications which enable viewpoint switching or for autostereoscopic displays which may present a large number of views simultaneously and let the viewers to observe the content from different viewpoints.

A view may be defined as a sequence of pictures representing one camera or viewpoint. The pictures representing a view may also be called view components. In other words, a view component may be defined as a coded representation of a view in a single access unit. In multiview video coding, more than one view is coded in a bitstream. Since views are typically intended to be displayed on stereoscopic or multiview autostrereoscopic display or to be used for other 3D arrangements, they typically represent the same scene and are content-wise partly overlapping although representing different viewpoints to the content. Hence, inter-view prediction may be utilized in multiview video coding to take advantage of inter-view correlation and improve compression efficiency. One way to realize inter-view prediction is to include one or more decoded pictures of one or more other views in the reference picture list(s) of a picture being coded or decoded residing within a first view. View scalability may refer to such multiview video coding or multiview video bitstreams, which enable removal or omission of one or more coded views, while the resulting bitstream remains conforming and represents video with a smaller number of views than originally. Region of Interest (ROI) coding may be defined to refer to coding a particular region within a video at a higher fidelity.

ROI scalability may be defined as a type of scalability wherein an enhancement layer enhances only part of a reference-layer picture e.g. spatially, quality-wise, in bit-depth, and/or along other scalability dimensions. As ROI scalability may be used together with other types of scalabilities, it may be considered to form a different categorization of scalability types. There exists several different applications for ROI coding with different requirements, which may be realized by using ROI scalability. For example, an enhancement layer can be transmitted to enhance the quality and/or a resolution of a region in the base layer. A decoder receiving both enhancement and base layer bitstream might decode both layers and overlay the decoded pictures on top of each other and display the final picture.

The spatial correspondence of a reference-layer picture and an enhancement-layer picture may be inferred or may be indicated with one or more types of so-called reference layer location offsets. In HEVC, reference layer location offsets may be included in the picture parameter set (PPS) NAL unit by the encoder and decoded from the PPS by the decoder. Reference layer location offsets may be used for but are not limited to achieving ROI scalability. Reference layer location offsets may comprise one or more of scaled reference layer offsets, reference region offsets, and resampling phase sets. Scaled reference layer offsets may be considered to specify the horizontal and vertical offsets between the sample in the current picture that is collocated with the top-left luma sample of the reference region in a decoded picture in a reference layer and the horizontal and vertical offsets between the sample in the current picture that is collocated with the bottom-right luma sample of the reference region in a decoded picture in a reference layer. Another way is to consider scaled reference layer offsets to specify the positions of the corner samples of the upsampled reference region relative to the respective corner samples of the enhancement layer picture. The scaled reference layer offset values may be signed. Reference region offsets may be considered to specify the horizontal and vertical offsets between the top-left luma sample of the reference region in the decoded picture in a reference layer and the top-left luma sample of the same decoded picture as well as the horizontal and vertical offsets between the bottom-right luma sample of the reference region in the decoded picture in a reference layer and the bottom-right luma sample of the same decoded picture. The reference region offset values may be signed. A resampling phase set may be considered to specify the phase offsets used in resampling process of a source picture for inter-layer prediction. Different phase offsets may be provided for luma and chroma components.

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit-depth of the enhancement layer and/or the sample values may undergo a mapping from the color space of the reference layer to the color space of the enhancement layer.

A scalable video coding and/or decoding scheme may use multi-loop coding and/or decoding, which may be characterized as follows. In the encoding/decoding, a base layer picture may be reconstructed/decoded to be used as a motion-compensation reference picture for subsequent pictures, in coding/decoding order, within the same layer or as a reference for inter-layer (or inter-view or inter-component) prediction. The reconstructed/decoded base layer picture may be stored in a decoded picture buffer (DPB). An enhancement layer picture may likewise be reconstructed/decoded to be used as a motion-compensation reference picture for subsequent pictures, in coding/decoding order, within the same layer or as reference for inter-layer (or inter-view or inter-component) prediction for higher enhancement layers, if any. In addition to reconstructed/decoded sample values, syntax element values of the base/reference layer or variables derived from the syntax element values of the base/reference layer may be used in the inter-layer/inter-component/inter-view prediction.

Inter-layer prediction may be defined as prediction in a manner that is dependent on data elements (e.g., sample values or motion vectors) of reference pictures from a different layer than the layer of the current picture (being encoded or decoded). Many types of inter-layer prediction exist and may be applied in a scalable video encoder/decoder. The available types of inter-layer prediction may for example depend on the coding profile according to which the bitstream or a particular layer within the bitstream is being encoded or, when decoding, the coding profile that the bitstream or a particular layer within the bitstream is indicated to conform to. Alternatively or additionally, the available types of inter-layer prediction may depend on the types of scalability or the type of an scalable codec or video coding standard amendment (e.g. SHVC, MV-HEVC, or 3D-HEVC) being used.

The types of inter-layer prediction may comprise, but are not limited to, one or more of the following: inter-layer sample prediction, inter-layer motion prediction, inter-layer residual prediction. In inter-layer sample prediction, at least a subset of the reconstructed sample values of a source picture for inter-layer prediction are used as a reference for predicting sample values of the current picture. In inter-layer motion prediction, at least a subset of the motion vectors of a source picture for inter-layer prediction are used as a reference for predicting motion vectors of the current picture. Typically, predicting information on which reference pictures are associated with the motion vectors is also included in inter-layer motion prediction. For example, the reference indices of reference pictures for the motion vectors may be inter-layer predicted and/or the picture order count or any other identification of a reference picture may be inter-layer predicted. In some cases, inter-layer motion prediction may also comprise prediction of block coding mode, header information, block partitioning, and/or other similar parameters. In some cases, coding parameter prediction, such as inter-layer prediction of block partitioning, may be regarded as another type of inter-layer prediction. In inter-layer residual prediction, the prediction error or residual of selected blocks of a source picture for inter-layer prediction is used for predicting the current picture. In multiview-plus-depth coding, such as 3D-HEVC, cross-component inter-layer prediction may be applied, in which a picture of a first type, such as a depth picture, may affect the inter-layer prediction of a picture of a second type, such as a conventional texture picture. For example, disparity-compensated inter-layer sample value and/or motion prediction may be applied, where the disparity may be at least partially derived from a depth picture.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

A coding standard or system may refer to a term operation point or alike, which may indicate the scalable layers and/or sub-layers under which the decoding operates and/or may be associated with a sub-bitstream that includes the scalable layers and/or sub-layers being decoded. In HEVC, an operation point is defined as bitstream created from another bitstream by operation of the sub-bitstream extraction process with the another bitstream, a target highest TemporalId, and a target layer identifier list as inputs.

The video parameter set (VPS) NAL unit of HEVC specifies layer sets and HRD parameters for these layer sets. A layer set may be used as the target layer identifier list in the sub-bitstream extraction process. In HEVC, a layer set may be defined as set of layers represented within a bitstream created from another bitstream by operation of the sub-bitstream extraction process with the another bitstream, the target highest TemporalId equal to 6, and the target layer identifier list equal to the layer identifier list associated with the layer set as inputs.

An output layer may be defined as a layer whose decoded pictures are output by the decoding process. The output layers may depend on which subset of the multi-layer bitstream is decoded. The pictures output by the decoding process may be further processed, e.g. a color space conversion from the YUV color space to RGB may be performed, and they may be displayed. However, further processing and/or displaying may be considered to be processes external of the decoder and/or the decoding process and might not take place.

In multi-layer video bitstreams, an operation point definition may include a consideration a target output layer set. For example, an operation point may be defined as a bitstream that is created from another bitstream by operation of the sub-bitstream extraction process with the another bitstream, a target highest temporal sub-layer (e.g. a target highest TemporalId), and a target layer identifier list as inputs, and that is associated with a set of output layers. Alternatively, another term, such as an output operation point, may be used when referring to an operation point and the associated set of output layers. For example, in MV-HEVC/SHVC, an output operation point may be defined as a bitstream that is created from an input bitstream by operation of the sub-bitstream extraction process with the input bitstream, a target highest TemporalId, and a target layer identifier list as inputs, and that is associated with a set of output layers.

An output layer set (OLS) may be defined as a set of layers consisting of the layers of one of the specified layer sets, where one or more layers in the set of layers are indicated to be output layers. An output layer may be defined as a layer of an output layer set that is output when the decoder and/or the HRD operates using the output layer set as the target output layer set. In MV-HEVC/SHVC, the variable TargetOlsIdx may specify which output layer set is the target output layer set by setting TargetOlsIdx equal to the index of the output layer set that is the target output layer set. A target output layer set may be defined as the output layer set for which the index is equal to TargetOlsIdx. TargetOlsIdxmay be set for example by the HRD and/or may be set by external means, for example by a player or alike through an interface provided by the decoder. In MV-HEVC/SHVC, an output layer may be defined as a layer of an output layer set that is output when TargetOlsIdx is equal to the index of the output layer set.

A profile may be defined as a subset of the entire bitstream syntax that is specified by a decoding/coding standard or specification. Within the bounds imposed by the syntax of a given profile it is still possible to require a very large variation in the performance of encoders and decoders depending upon the values taken by syntax elements in the bitstream such as the specified size of the decoded pictures. In many applications, it might be neither practical nor economic to implement a decoder capable of dealing with all hypothetical uses of the syntax within a particular profile. In order to deal with this issue, levels may be used. A level may be defined as a specified set of constraints imposed on values of the syntax elements in the bitstream and variables specified in a decoding/coding standard or specification. These constraints may be simple limits on values. Alternatively or in addition, they may take the form of constraints on arithmetic combinations of values (e.g., picture width multiplied by picture height multiplied by number of pictures decoded per second). Other means for specifying constraints for levels may also be used. Some of the constraints specified in a level may for example relate to the maximum picture size, maximum bitrate and maximum data rate in terms of coding units, such as macroblocks, per a time period, such as a second. The same set of levels may be defined for all profiles. It may be preferable for example to increase interoperability of terminals implementing different profiles that most or all aspects of the definition of each level may be common across different profiles. A tier may be defined as specified category of level constraints imposed on values of the syntax elements in the bitstream, where the level constraints are nested within a tier and a decoder conforming to a certain tier and level would be capable of decoding all bitstreams that conform to the same tier or the lower tier of that level or any level below it.

In some cases, a conformance point may be defined as a combination of a particular profile and a particular level or a combination of a particular profile, a particular tier, and a particular level. It needs to be understood that a conformance point may be defined in alternative ways, while its intent to specify characteristics and limits of bitstream and/or characteristics and (maximum) resources of decoders may be kept unchanged.

In the multi-layer HEVC extensions, a profile-tier-level combination is indicated for each necessary layer for each output layer set. A necessary layer may be defined as a layer in an output operation point associated with an output layer set, the layer being an output layer of the output layer set, or a reference layer of an output layer of the output layer set. For the multi-layer HEVC extensions, a conformance point may be defined as a list of profile-tier-level combinations, where the list includes the profile-tier-level combination for each necessary layer of a particular output layer set. Different profile-tier-level value (particularly different level value) can be indicated for the same layer in different output layer sets, as the decoded picture buffer requirements differ depending on which layers are necessary layers and which layers are output layers, and the decoded picture buffer requirements are part of the level specifications. Decoder capabilities can be indicated as a list of profile-tier-level combinations. For these mentioned reasons, a single profile-tier-level value within a codecs MIME parameter might not be sufficient to describe a multi-layer HEVC bitstream stored e.g. in an ISOBMFF compliant file.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

A URL may be defined to have the following syntax: scheme://[user:password@]domain:port/path?query_string#fragment_id. The scheme may, but is not required to, indicate the name of a protocol (e.g. http). The domain indicates the Internet Protocol address or the domain name, which can be resolved by the DNS (Domain Name System) protocol. The port number indicates the used Internet Protocol port. The path indicates the resource, such as a file, pointed to by the URL. The query string contains data to be passed to the entity that resolves the URL. It may contain name-value pairs separated by ampersands, for example ?first_para=123&second_para=ABC. The fragment identifier specifies a part of the resource. The fragment identification scheme may depend on the MIME type of the resource.

Available media file format standards include ISO base media file format (ISO/IEC 14496-12, which may be abbreviated ISOBMFF) as well as standards derived from the ISOBMFF, such as MPEG-4 file format (ISO/IEC 14496-14, also known as the MP4 format), file format for NAL unit structured video (ISO/IEC 14496-15) and 3GPP file format (3GPP TS 26.244, also known as the 3GP format). ISO/IEC 14496-15 specifies the storage of bitstreams of the Advanced Video Coding standard (H.264/AVC) and/or the High Efficiency Video Coding standard (HEVC) and/or their extensions in ISOBMFF compliant files.

Some concepts, structures, and specifications of ISOBMFF are described below as an example of a container file format, based on which the embodiments may be implemented. The aspects of the invention are not limited to ISOBMFF, but rather the description is given for one possible basis on top of which the invention may be partly or fully realized.

One building block in the ISO base media file format is called a box. Each box may have a header and a payload. The box header indicates the type of the box and the size of the box in terms of bytes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISO base media file format may be considered to specify a hierarchical structure of boxes. Each box of the ISO base media file may be identified by a four-character code (4CC, fourCC). A four-character code may interchangeably be represented by a 32-bit unsigned integer (by assuming a certain conversion of characters to 8-bit values, a certain bit endianness, and a certain byte endianness). The header may provide information about the type and size of the box.

According to the ISO family of file formats, a file may include media data and metadata that may be enclosed in separate boxes. In an example embodiment, the media data may be provided in a media data (mdat) box and the movie (moov) box may be used to enclose the metadata. In some cases, for a file to be operable, both of the mdat and moov boxes must be present. The movie (moov) box may include one or more tracks, and each track may reside in one corresponding track (trak) box. Each track is associated with a handler, identified by a four-character code, specifying the track type. Video, audio, and image sequence tracks can be collectively called media tracks, and they contain an elementary media stream. Other track types comprise hint tracks and timed metadata tracks. Tracks comprise samples, such as audio or video frames. A media track refers to samples (which may also be referred to as media samples) formatted according to a media compression format (and its encapsulation to the ISO base media file format). A hint track refers to hint samples, containing cookbook instructions for constructing packets for transmission over an indicated communication protocol. The cookbook instructions may include guidance for packet header construction and may include packet payload construction. In the packet payload construction, data residing in other tracks or items may be referenced. As such, for example, data residing in other tracks or items may be indicated by a reference as to which piece of data in a particular track or item is instructed to be copied into a packet during the packet construction process. A timed metadata track may refer to samples describing referred media and/or hint samples. For the presentation of one media type, one media track may be selected. Samples of a track may be implicitly associated with sample numbers that may be incremented e.g. by 1 in the indicated decoding order of samples. The first sample in a track may be associated with sample number 1.

The 'trak' box contains a Sample Table box. The Sample Table box comprises e.g. all the time and data indexing of the media samples in a track. The Sample Table box is required to contain a Sample Description box. The Sample Description box includes an entry count field, specifying the number of sample entries included in the box. The Sample Description box is required to contain at least one sample entry. The sample entry format depends on the handler type for the track. Sample entries give detailed information about the coding type used and any initialization information needed for that coding.

The ISO base media file format does not limit a presentation to be contained in one file. As such, a presentation may be comprised within several files. As an example, one file may include the metadata for the whole presentation and may thereby include all the media data to make the presentation self-contained. Other files, if used, may not be required to be formatted to ISO base media file format, and may be used to include media data, and may also include unused media data, or other information. The ISO base media file format concerns the structure of the presentation file only. The format of the media-data files may be constrained by the ISO base media file format or its derivative formats only in that the media-data in the media files is formatted as specified in the ISO base media file format or its derivative formats.

The ability to refer to external files may be realized through data references. In some examples, a sample description box included in each track may provide a list of sample entries, each providing detailed information about the coding type used, and any initialization information needed for that coding. All samples of a chunk and all samples of a track fragment may use the same sample entry. A chunk may be defined as a contiguous set of samples for one track. The Data Reference (dref) box, which may also be included in each track, may define an indexed list of uniform resource locators (URLs), uniform resource names (URNs), and/or self-references to the file containing the metadata. A sample entry may point to one index of the Data Reference box, thereby indicating the file containing the samples of the respective chunk or track fragment.

The movie fragment feature may enable splitting the metadata that otherwise might reside in the movie box into multiple pieces. Each piece may correspond to a certain period of time of a track. In other words, the movie fragment feature may enable interleaving file metadata and media data. Consequently, the size of the movie box may be limited and the use cases mentioned above be realized.

In some examples, the media samples for the movie fragments may reside in an mdat box, if they are in the same file as the moov box. For the metadata of the movie fragments, however, a moof box may be provided. The moof box may include the information for a certain duration of playback time that would previously have been in the moov box. The moov box may still represent a valid movie on its own, but in addition, it may include an mvex box indicating that movie fragments will follow in the same file. The movie fragments may extend the presentation that is associated to the moov box in time.

Within the movie fragment there may be a set of track fragments, including anywhere from zero to a plurality per track. The track fragments may in turn include anywhere from zero to a plurality of track runs, each of which document is a contiguous run of samples for that track. Within these structures, many fields are optional and can be defaulted. The metadata that may be included in the moof box may be limited to a subset of the metadata that may be included in a moov box and may be coded differently in some cases. Details regarding the boxes that can be included in a moof box may be found from the ISO base media file format specification. A self-contained movie fragment may be defined to consist of a moof box and an mdat box that are consecutive in the file order and where the mdat box contains the samples of the movie fragment (for which the moof box provides the metadata) and does not contain samples of any other movie fragment (i.e. any other moof box).

The ISO Base Media File Format contains three mechanisms for timed metadata that can be associated with particular samples: sample groups, timed metadata tracks, and sample auxiliary information. Derived specification may provide similar functionality with one or more of these three mechanisms.

A sample grouping in the ISO base media file format may be defined as an assignment of each sample in a track to be a member of one sample group, based on a grouping criterion. A sample group in a sample grouping is not limited to being contiguous samples and may contain non-adjacent samples. As there may be more than one sample grouping for the samples in a track, each sample grouping may have a type field to indicate the type of grouping. Sample groupings may be represented by two linked data structures: (1) a SampleToGroup box (sbgp box) represents the assignment of samples to sample groups; and (2) a SampleGroupDescription box (sgpd box) contains a sample group entry for each sample group describing the properties of the group. There may be multiple instances of the SampleToGroup and SampleGroupDescription boxes based on different grouping criteria. These may be distinguished by a type field used to indicate the type of grouping. The 'sbgp' and the 'sgpd' boxes may be linked using the value of grouping type and, in some versions of the boxes, also the value of grouping_type_parameter. The 'sbgp' box indicates the index of the sample group description entry that a particular sample belongs to.

Files conforming to the ISOBMFF may contain any non-timed objects, referred to as items, meta items, or metadata items, in a meta box (four-character code: 'meta'). While the name of the meta box refers to metadata, items can generally contain metadata or media data. The meta box may reside at the top level of the file, within a movie box (four-character code: 'moov'), and within a track box (four-character code: 'trak'), but at most one meta box may occur at each of the file level, movie level, or track level. The meta box may be required to contain a 'hdlr' box indicating the structure or format of the 'meta' box contents. The meta box may list and characterize any number of items that can be referred and each one of them can be associated with a file name and are uniquely identified with the file by item identifier (item id) which is an integer value. The metadata items may be for example stored in the 'idat' box of the meta box or in an 'mdat' box or reside in a separate file. If the metadata is located external to the file then its location may be declared by the DataInformationBox (four-character code: 'dinf'). In the specific case that the metadata is formatted using XML syntax and is required to be stored directly in the MetaBox, the metadata may be encapsulated into either the XMLBox (four-character code: 'xml ') or the BinaryXMLBox (four-character code: 'bxml'). An item may be stored as a contiguous byte range, or it may be stored in several extents, each being a contiguous byte range. In other words, items may be stored fragmented into extents, e.g. to enable interleaving. An extent is a contiguous subset of the bytes of the resource; the resource can be formed by concatenating the extents.

In order to support more than one meta box at any level of the hierarchy (file, movie, or track), a meta box container box ('meco') may be used as one ISO base media file format. The meta box container box may carry any number of additional meta boxes at any level of the hierarchy (file, movie, or track). This may allow that e.g. the same meta-data is being presented in two different, alternative meta-data systems. The meta box relation box ('mere') may enable describing how different meta boxes relate to each other, e.g. whether they contain exactly the same metadata (but described with different schemes) or if one represents a superset of another one.

High Efficiency Image File Format (HEIF) is a standard developed by the Moving Picture Experts Group (MPEG) for storage of images and image sequences. The standard facilitates file encapsulation of data coded according to High Efficiency Video Coding (HEVC) standard. HEIF includes a rich set of features building on top of the used ISO Base Media File Format (ISOBMFF).

HEVC-coded content in HEIF format enables a wide range of use cases varying from still picture capture, storage and sharing to multi-image use cases, such as sharing of image bursts or storing sets of images for the purpose of processing those by means of computational photography. Computational photography forms a new category of uses cases that can benefit from the HEIF. A set of related images can be stored in a single file with associated metadata indicating relationships between different pictures. Examples of such emerging use cases include refocusing the shot by selecting an image with a desired focus from a set of picture captured with different focal lengths, high dynamic range photography by combining pictures with different exposures, and building of omnidirectional or panoramic images from a set of pictures with connected scenery.

The ISOBMFF structures and features are used to a large extent in the design of HEIF, and HEIF files also conform to ISOBMFF. The basic design for HEIF comprises that still images are stored as items and image sequences are stored as tracks.

In the context of HEIF, the following boxes may be contained within the root-level 'meta' box and may be used as described in the following. In HEIF, the handler value of the Handler box of the 'meta' box is 'pict'. The resource (whether within the same file, or in an external file identified by a uniform resource identifier) containing the coded media data is resolved through the Data Information ('dinf) box, whereas the Item Location ('iloc') box stores the position and sizes of every item within the referenced file. The Item Reference ('iref) box documents relationships between items using typed referencing. If there is an item among a collection of items that is in some way to be considered the most important compared to others then this item is signaled by the Primary Item ('pitm') box. Apart from the boxes mentioned here, the 'meta' box is also flexible to include other boxes that may be necessary to describe items.

Any number of image items can be included in the same file. Given a collection images stored by using the 'meta' box approach, it sometimes is essential to qualify certain relationships between images. Examples of such relationships include indicating a cover image for a collection, providing thumbnail images for some or all of the images in the collection, and associating some or all of the images in a collection with auxiliary image such as an alpha plane. A cover image among the collection of images is indicated using the 'pitm' box. A thumbnail image or an auxiliary image is linked to the primary image item using an item reference of type 'thmb' or 'auxl', respectively.

HEIF supports derived images. An item is a derived image, when it includes a 'dimg' item reference to another item. A derived image is obtained by performing a specified operation, such as rotation, to specified input images. The operation performed to obtain the derived image is identified by the item type of the item. The image items used as input to a derived image may be coded images, e.g. with item type 'hvc1', or they may be other derived image items. HEIF includes the specification of the clean aperture (i.e. cropping) operation, a rotation operation for multiple-of-90-degree rotations, and an image overlay operation. The image overlay 'iovl' derived image locates one or more input images in a given layering order within a larger canvas. The derived image feature of HEIF is extensible so that external specifications as well as later version of HEIF itself can specify new operations.

The following definitions may be used e.g. in the context of HEIF or similar file formats. A coded image may be defined as a coded representation of an image. A derived image may be defined as an image that is represented in a file by an indicated operation to indicated images and can be obtained by performing the indicated operation to the indicated images. An image may be defined as a coded image, a derived image, or one or more arrays of pixels of different colour components, depending on the context where the term image is used. An image collection may be defined as a set of images stored as items of a single file according to HEIF (or alike). An auxiliary image may be defined as an image that may not be intended to be displayed but provides supplemental information, such as transparency data, complementing a respective primary image. A cover image may be defined as an image that is representative of an image collection or an image sequence and should be displayed when no other information is available on the preferred displaying method of the image collection or the image sequence. A pre-computed derived image may be defined as a coded image that has been derived from one or more other images. A master image may be defined as an image that is stored as an item and is not an auxiliary image or a thumbnail image. A thumbnail image may be defined as a smaller-resolution representation of a primary image.

A file that contains an image sequence comprises file metadata for the tracks, which file metadata can be stored in the Movie box ('moov') and its child boxes. The file metadata includes for example information where in the file to locate the coded media data for the tracks. Each track has a type, identified by a four-character handler code. HEIF specifies also a handler type 'pict' for image sequences. Tracks comprise samples, such as audio or video frames, which are stored in the Media Data box ('mdat') or in an external file.

An image sequence track can be used for a set of images where inter picture prediction is used to improve compression performance or when an image sequence is associated with timing information. In the former case, a non-timed playout, such as showing the images in a gallery view, should be chosen by the player, while in the latter case, the image sequence should be played as a timed slideshow. As opposed to video tracks, the timing in the image sequence track may be considered advisory. HEIF provides means to indicate which one of these two is the preferred playback method. In order to distinguish between image sequences and motion video, a new handler type 'pict' has been introduced in HEIF.

HEIF includes specifications to encapsulate (by inclusion and/or by reference) HEVC coded still images and image sequences into files conforming to the HEIF. It is possible to specify encapsulation of images and image sequences coded with other coding formats into files conforming to HEIF.

An entity may be defined as a collective term of a track or an item. An entity group is a grouping of items, which may also group tracks. An entity group can be used instead of item references, when the grouped entities do not have clear dependency or directional reference relation. The entities in an entity group share a particular characteristic or have a particular relationship, as indicated by the grouping type.

In HEIF and/or ISOBMFF, entity groups are indicated in GroupsListBox. Entity groups specified in GroupsListBox of a file-level MetaBox refer to tracks or file-level items. Entity groups specified in GroupsListBox of a movie-level MetaBox refer to movie-level items. Entity groups specified in GroupsListBox of a track-level MetaBox refer to track-level items of that track. GroupsListBox contains EntityToGroupBoxes, each specifying one entity group.

One of the entity grouping types may enable grouping of image items and tracks of a file into one or more alternate groups (i.e. one or more groups of alternative entities or alternate entity groups). The items and tracks mapped to a group of this grouping type are alternatives to each other, and only one of them should be played (when the mapped items and tracks are part of the presentation; e.g. are displayable image items or tracks) or processed by other means (when the mapped items or tracks are not part of the presentation; e.g. are metadata). Players should select one image item or track of an alternate group for playback. The items and tracks of an alternate group may be listed in their preference order.

Files conforming to HEIF may start with a File Type box ('ftyp'), which contains a list of brands the file complies with. A brand can be identified by its unique four-character code. The specification of a brand can include requirements and constraints for files of the brand and for file players supporting the brand. A brand included in the File Type box permits a player supporting the requirements of the brand to play the file.

Internet media types, also known as MIME (Multipurpose Internet Mail Extension) types, are used by various applications to identify the type of a resource or a file. MIME types consist of a media type ('image' in the case of HEIF files), a subtype, and zero or more optional parameters.

MIME is an extension to an email protocol which makes it possible to transmit and receive different kinds of data files on the Internet, for example video and audio, images, software, etc. An internet media type is an identifier used on the Internet to indicate the type of data that a file contains. Such internet media types may also be called as content types. Several MIME type/subtype combinations exist that can contain different media formats. Content type information may be included by a transmitting entity in a MIME header at the beginning of a media transmission. A receiving entity thus may need to examine the details of such media content to determine if the specific elements can be rendered given an available set of codecs. Especially, when the end system has limited resources, or the connection to the end systems has limited bandwidth, it may be helpful to know from the content type alone if the content can be rendered.

Two parameters, 'codecs' and 'profiles' are specified to be used with various MIME types or type/subtype combinations to allow for unambiguous specification of the codecs employed by the media formats contained within, or the profile(s) of the overall container format.

By labelling content with the specific codecs indicated to render the contained media, receiving systems can determine if the codecs are supported by the end system, and if not, can take appropriate action (such as rejecting the content, sending notification of the situation, transcoding the content to a supported type, fetching and installing the required codecs, further inspection to determine if it will be sufficient to support a subset of the indicated codecs, etc.). For file formats derived from the ISOBMFF, the codecs parameter may be considered to comprise a comma-separated list of one or more list items.

When a list item of the codecs parameter represents a track of an ISOBMFF compliant file, the list item may comprise a four-character code of the sample entry of the track. For HEVC, the format of the list item is specified in ISO/IEC 14496-15.

When a list item of the codecs parameter indicates an item of a HEIF compliant file, the string 'metaitem.' is followed by one or more plus ('+') separated item descriptions, each of which starts with the four-character item type of a coded image or a derived image. When the item type is a four-character code of a coded image, it is followed by a dot-separated ('.') profile-tier-level value specified for the codecs parameter of the ISOBMFF namespace. For HEVC, the format of profile-tier-level value is specified in ISO/IEC 14496-15. When the item type is a four-character code of a derived image, it may be followed by a dot-separated ('.') pixel count value that is the positive decimal integer indicating the number of pixels that is required for the input images of the derived image and the derived image itself. The pixel count value may be required to be present for an item description that requires the greatest number of pixels, when that pixel count value is greater than twice the largest pixel count inferred from the profile-tier-level value of any coded image of the same list item.

The profiles MIME parameter can provide an overall indication, to the receiver, of the specifications with which the content complies. This is an indication of the compatibility of the container format and its contents to some specification. The receiver may be able to work out the extent to which it can handle and render the content by examining to see which of the declared profiles it supports, and what they mean. The profiles parameter for an ISOBMFF file may be specified to comprise a list of the compatible brands included in the file.

One of original motivations for MIME is the ability to identify the specific media type of a message part. However, due to various factors, it is not always possible from looking at the MIME type and subtype to know which specific media formats are contained in the body part or which codecs are indicated in order to render the content.

There are several media type/subtypes (either currently registered or deployed with registration pending) that contain codecs chosen from a set. In the absence of the parameters described in this disclosure, it is necessary to examine each media element in order to determine the codecs or other features required to render the content.

The parameter value of the codecs parameter is specified as follows: a single value, or a comma-separated list of values identifying the codec(s) indicated to render the content in the body part. Each value consists of one or more dot-separated elements. The name space for the first element is determined by the MIME type. The name space for each subsequent element is determined by the preceding element.

HTML (Hypertext Markup Language) is a markup language for creating web pages. In the 5th version of the HTML (HTML 5), new features are provided to user creating the web page to use multiple image resources that the web browser can choose from. For example, different devices may have different physical dimensions, different functions, different capabilities and performances. This means that mobile phone's screen may be 4 inches diagonally, while laptop's screen may be 14 inches diagonally. In addition, user devices' screen pixel density may be different from another, e.g. mobile phone's screen may have three times as many physical pixels per inch compared to another mobile phone's screen, regardless of their physical screen size. In addition, the user devices' zoom level may be different from another, or may change for a user over time. In addition, the user devices' screen orientation may be different from one another, or may change for a single user over time. For example, a table can be held upright or rotated 90 degrees, so that the screen is either "portrait" or "landscape". In addition, the users may have different network speed, network latency and/or bandwidth cost, or this may even change for a single user over time. For example, the user may be on a fast, low-latency and constant-cost connection at work, and on a slow, low-latency and constant-cost connection at home, and on a variable-speed, high-latency and variable-cost connection anywhere else.

In addition of the new features of HTML 5, the users creating the web pages are allowed to show the same image content but with different rendered size depending on, usually, the width of the viewport. This may be referred to as viewport-based selection. A web page may comprise a banner that is configured to span the entire viewpoint width. In this case, the rendered size of the image depends on the physical size of the screen (assuming a maximized browser window). For example, another web page may have images in columns, with a single column for screens with a small physical size, two columns for screens with medium physical size and three columns for screens with big physical size, with the images varying in rendered size in each case to fill up the viewport. In such case, the rendered size of an image may be bigger in the one-column layout compared to the two-column layout despite the screen being smaller.

In addition of the new features of HTML 5, the users generating the web pages are allowed to show different image content depending on the rendered size of the image. This may be referred to as art direction. When a web page is viewed on a screen with a large physical size (assuming a maximized browser window), the author may wish to include some less relevant parts surrounding the critical part of the image. When the same web page is viewed on a screen with a small physical size, the author may wish to show only the critical part of the image.

Yet in addition, the HTML 5 allows users generating the web page to show the same image content but using different image formats, depending on which image format the web browser supports. This may be referred to as image format-based selection. For example, a web page may have some image in the JPEG, WebP and JPEG XR image formats, having different compression abilities compared to each other. Since different web browsers can be support different image formats, with some formats offering better compression rations, the author might want to serve the better formats to user agents that support them, while providing less good formats for fallback for user agents that don't.

HTML 5 includes an img element that represents an image. The img element includes src attribute referencing a non-interactive, optionally animated, image resource that is neither paged nor scripted. The img element may also contain a srcset attribute. If present, it contains one or more comma-separated image candidate strings. An image candidate string consists of the following components, in order, with the further restrictions described below: 1) zero or more space characters; 2) a valid non-empty URL (Uniform Resource Locator) that does not start or end with a U+002C COMMA character (,), referencing a non-interactive, optionally animated, image resource that is neither paged nor scripted; 3) zero or more space characters; 4) zero or one of the following: a width descriptor, consisting of: a space character, a valid non-negative integer giving a number greater than zero representing the width descriptor value, and a U+077 LATIN SMALL LETTER W character; a pixel density descriptor, consisting of: a space character, a valid floating-point number giving a number greater than zero representing the pixel density descriptor value, and a U+0078 LATIN SMALL LETTER X character; 5) zero or more space characters.

The descriptors may be used for characterizing the image candidate and hence for selecting an appropriate image meeting the desired characteristics.

The img element may or may not be contained in a picture element in HTML 5.

HTML 5 includes the picture element, which contains zero or more source elements, followed by one img element. The picture element is a container which provides multiple sources to its contained img element to allow authors to declaratively control or give hints to the browser about which image resource to user, based on the screen pixel density, viewport size, image format and other factors.

The source element allows authors to specify multiple alternative source sets for img elements. The source element within a picture element always includes the srcset attribute, may and conditionally has to include the sizes attribute (when the srcset attribute includes a width descriptor among any candidate string), optionally includes the media attribute, and optionally includes the type attribute. The media attribute contains a valid media query list. A media query allows to test and query values or features of the user agent or display device. The syntax of a media query consists of an optional media query modifier, an optional media type, and zero or more media features. A media query is a logical expression that resolves to either true or false. A media query is true, when the media type, if specified, matches the media type of the device where the user agent is running and the media condition (e.g. related to the features of the user agent or the display device) is true. The type attribute contains a valid MIME type. The sizes, media and type attributes, when present, may characterize the source set (i.e. the images identified in the srcset attribute of the same source element) and hence may be used for selecting an appropriate source set meeting the desired application characteristics or preferences. Further, from this source set, an appropriate image may then be selected.

Further, HTML 5 comprises links, which are conceptual construct, created by a, area and link elements, that represents a connection between two resources, one of which is the current Document. There are two kinds of links in HTML: 1) links to external resources, which are links to resources that are to be used to augment the current document, generally automatically processed by the web browser; and 2) hyperlinks, which are links to other resources that are generally exposed to the user by the web browser so that the user can cause the web browser to navigate to those resources, e.g. to visit them in a browser or download them.

For link elements with an href attribute and a rel attribute, links must be created for the keywords of the rel attribute, as defined for those keywords. Similarly, for a and area elements with an href attribute and a rel attribute, links must be created for the keywords of the rel attribute as defined for those keywords. Unlike link elements, however, a and area element with an href attribute that either do not have a rel attribute, or whose rel attribute has no keywords that are defined as specifying hyperlinks, must also create a hyperlink. This implied hyperlink has no special meaning (it has no link type) beyond linking the element's node document to the resource given by the element's href attribute.

There are a number of link types in HTML 5 as well in other specifications. A link type is specified as a specific character string used as the value of the rel attribute. For example, the prefetch link type specifies that the target resources should be preemptively cached.

URL fragment identifiers (which may also be referred to as URL forms) may be specified for a particular content type to access a part of the resources, such as a file, indicated by the base part of the URL (without the fragment identifier). URL fragment identifiers may be identified for example by a hash ('#') characters within the URL. For the ISOBMFF, it may be specified that URL fragments "#X" refers to a track with track_ID equal to X, "#item_ID=" and "#item_name=" refer to file level meta box(es), "#/item_ID=" and "#/item_name=" refer to the meta box(es) in the Movie box, and "#track_ID=X/item_ID=" and "#tarck_ID=X/item_name=" refer to meta boxes in the track with track ID equal to X, including the meta boxes potentially found in movie fragments.

HTTP (HyperText Transfer Protocol) is stateless request/response protocol wherein messages are exchanged across a reliable transport or session-layer "connection". A client program in HTTP establishes a connection to a server and sends one or more HTTP requests. A server program in HTTP accepts connections and sends HTTP responses to the HTTP requests. Term user agent refers to a program that initiates a request, e.g. a WWW browser, editor, or spider (web-traversing robot), and the term origin server refers to a program that can originate authoritative responses to a request. Term sender refers to whichever component sending a message, and term receiver refers to any component that receives the message.

A retrieval request (GET) in a HTTP communication is a request for a representation of a resource identified by a URI. This can be accomplished via a single bidirectional connection between a user agent and an origin server.

In operation, a client sends an HTTP request to the server. The HTTP request is in the form of a request message that begins with a method, URI and a protocol version, and is followed by MIME-like header fields containing request modifiers, client information and payload metadata, an empty line to indicate the end of the header section, and finally the payload body (if any).

A server is configured to respond to the client's request by sending an HTTP response message. The HTTP response message begins with a status line that includes the protocol version, a success or error rate, and textual reason phrase, followed by MIME-like header fields containing server information, resources metadata and payload metadata, an empty line to indicate the end of the header section, and finally the payload body (if any).

HTTP enables the user of intermediaries to satisfy requests through a chain of connections. There are three common forms of HTTP intermediary: proxy, gateway, and tunnel. In some cases, a single intermediary may act as an origin server, proxy, gateway, or tunnel, switching behavior based on the nature of each request.

For example, where there are three intermediaries (A, B, C) between a user agent and origin server, a request or response message traveling the whole chain will pass through four separate connections. Some HTTP communication options may apply only to the connection with the nearest, non-tunnel neighbor, only to participant may be engaged in multiple, simultaneous communications. For example, an intermediary B may be receiving requests from many clients other than an intermediary A, and/or forwarding request to servers other than an intermediary C, at the same time that it is handling intermediary A's request.

Terms "upstream" and "downstream" may be used to describe various requirements in relation to a directional flow of message: all messages are configured to flow from upstream to downstream. Terms "inbound" and "outbound" refer to directions in relation to the request path: "inbound" means towards the origin server, and "outbound" means toward the user agent.

Term "proxy" refers to a message forwarding agent that is selected by the client, usually via local configuration rules, to receive requests for some type(s) of absolute URI and attempt to satisfy those requests via translation through the HTTP interface. Some translations are minimal, such as for proxy requests for "http" URIs, whereas other requests may require translation to and from entirely different application-layer protocols. Proxies are often used to group an organization's HTTP requests through a common intermediary for the sake of security, annotation services, or shared caching.

An HTTP-to-HTTP proxy is called a "transforming proxy" if it is designed or configured to modify request or response messages in a semantically meaningful way (i.e. modifications, beyond those required by normal HTTP processing, that change the message in a way that would be significant to the original sender or potentially significant to downstream recipients). For example, a transforming proxy may be acting as a shared annotation server (modifying responses to include references to a local annotation database), a malware filter, a format transcoder, or an intranet-to-Internet privacy filter. Such transformations are presumed to be desired by the client (or client organization) that selected the proxy. Term " non-transforming proxy refers to a proxy that is not intended to transform a given message.

Term "gateway" (also called "reverse proxy") is a receiving agent that acts as a layer above some other server(s) and translates the received requests to the underlying server's protocol. Gateways are often used to encapsulate legacy or untrusted information services, to improve server performance though "accelerator" caching, and to enable partitioning or load-balancing of HTTP services across multiple machines.

A gateway is configured to act as an origin server on its outbound connection and as a user agent on its inbound connection. All HTTP requirements applicable to an origin server also apply to the outbound communication of a gateway. A gateway communicates with inbound servers using any protocol that it desires, including private extensions to HTTP. However, an HTTP-to-HTTP gateway that wishes to interoperate with third-party HTTP servers must comply with HTTP user agent requirements on the gateway's inbound connection and must implement the Connection and Via header fields for both connections.

Term "tunnel" refers to an element acting as a blind relay between two connections without changing the messages. Once active, a tunnel is not considered a party to the HTTP communication, though the tunnel might have been initiated by an HTTP request. A tunnel ceases to exist when both ends of the relayed connection are closed. Tunnels are used to extend a virtual connection through an intermediary, such as when a transport-layer security is used to establish private communication through a shared firewall proxy.

Term "cache" refers to a local store of previous response messages and the subsystem that controls its message storage, retrieval and deletion. A cache stores cacheable responses in order to reduce the response time and network bandwidth consumption on future, equivalent requests. Any client or server may employ a cache, though a cache cannot be used by a server while it is acting as a tunnel. The effect of a cache is that the request/response chain is shortened if one of the participants along the chain has a cached response applicable to that request. A response is cacheable if a cache is allowed to store a copy of the response message for use in answering subsequent requests. Even when a response is cacheable, there may be additional constraints placed by the client or by the origin server on when that cached response can be used for a particular request. There are a wide variety of architectures and configurations of caches and proxies deployed across the World Wide Web and inside large organizations. These systems include national hierarchies of proxy caches to save transoceanic bandwidth, systems that broadcast or multicast cache entries, organizations that distribute subsets of cached data via optical media, etc.

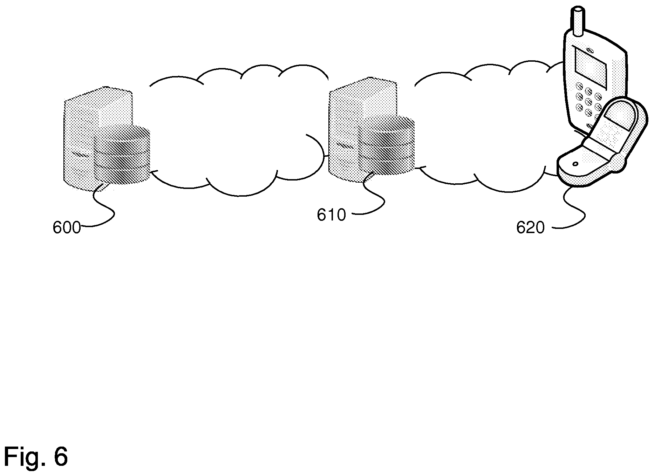

Figure 6 illustrates an example of a system comprising an origin server 600, a cache 610 and client devices 620.

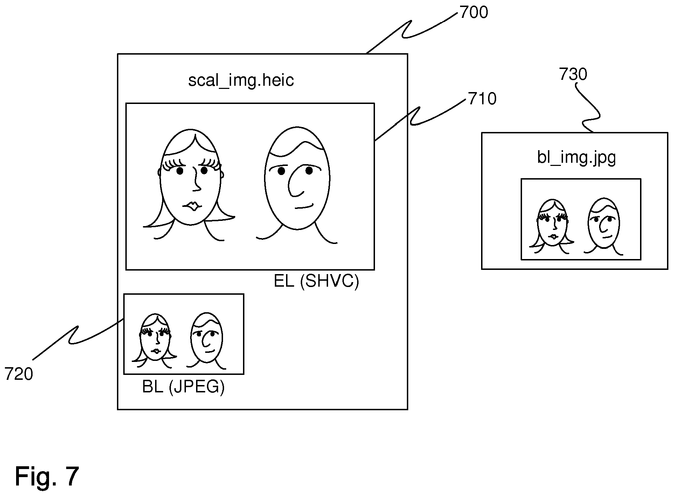

HTML 5 provides features for indicating different versions or alternatives of an image to enable web browsers to select an appropriate image e.g. based on its coding format and/or the width of a display window. However, HTML 5 is based on the assumption that each image file is self-standing, i.e. can be decoded on its own without the need for any other file. Hence, if scalable image coding is used for files that are includes as part of HTML 5 content, the files need to be self-standing, i.e. contain all the layers needed for decoding a targeted highest layer. This is illustrates in an example shown in Figure 7, in which the same base-layer image needs to be present in two files 700, 730, the file (bl_img.jpg) 730 containing only the base layer and the file (scal img.heic) 700 that contains both the base layer 720 and the enhancement layer 710. The storage space in the origin server is therefore sub-optimally used as two copies of the same BL image are stored.

```
          <picture>
                <source type="image/heic; src="scal_img.heic" />
                <img src="bl_img.jpg" alt="Fallback text" />
          </picture>
```

A benefit of scalable video/image coding compared to coding several single-layer versions of video/image bitstreams is the lower storage space requirement. In order to take advantage of the reduced storage space in HTTP caching, the following is needed: 1) Each layer needs to have a unique URI. This can be achieved by storing each layer as a separate layer; 2) Each unique URI needs to be exposed in a manner that web browsers have the capability to issue a separate HTTP GET request. It is therefore asserted that HTML 5 is incapable of making user of scalable image coding in a manner that a benefit in lower storage space and potentially better hit radio and HTTP caching would be achieved.

In the present examples , a markup language code, such as HTML 5 page, is created in a manner that it refers to a first image and a second image, wherein the second image depends on the first image (e.g. uses the first image as a reference for prediction); that it indicates that the first image and the second image are alternatives; that it indicates that the second image depends on the first image; and that it indicates that when the second image is to be displayed, the first image can be displayed first to achieve progressive refinement.

In general, progressive refinement may comprise displaying a basic or coarse representation of a media file, such as a HEIF file, and gradually refining or enhancing that representation over time. Gradual refinement may comprise one or more refinement steps. The refinement or enhancement may take different forms, such as but not limited to one or more of the following: spatial refinement (which may be perceived by an increased amount of and/or finer details), gradual increments towards broader or richer color representation, dynamic range refinement, and temporal refinement (e.g. enhancing a still picture to become an animation and/or increasing the picture rate of a timed sequence, which may be repetitively played).

In the present examples , a markup language code, such as HTML 5 page, is parsed in a manner that references to a first image and to a second image, wherein the second image depends on the first image (e.g. uses the first image as a reference for prediction) are parsed from the markup language code; that information that the first image and the second image are alternatives is parsed from the markup language code; that information that the second image depends on the first image is parsed from the markup language code; and that information that when the second image is to be displayed, the first image can be displayed first to achieve progressive refinement is parsed from the markup language code.

The second image may be selected or determined, e.g. by a user agent, to be displayed among the first image, the second image, and potentially other images for example due to one or more of the following reasons or causes: the resolution (horizontal and vertical pixel count) of the second image is equal to close to the window size used for displaying; the second image is associated with characteristics that are determined to suit the present viewing conditions, such as supported bit depth and/or color gamut of the display device; the second image has a higher resolution (pixel count) than the first image; the second image is indicated to have a higher picture quality than the first image. Said selection or determination may be based on one or more queries or alike, which can be included in the markup language code e.g. by a content author, or parsed from the markup language code e.g. by a user agent.

When the second image is selected to be displayed, as a response to the above-described parsing, the following takes place: the first image is fetched and decoded; and the second image is fetched and decoded, where the first image is used in the decoding of the second image (e.g. the decoded first image may be provided for the decoding of the second image as an interlayer reference picture). Additionally, progressive refinement may be applied in displaying, i.e. the decoded first image may be displayed prior to displaying the decoded second image. Both images may be displayed in the same display window, i.e. the decoded second image may replace the decoded first image in the display window.

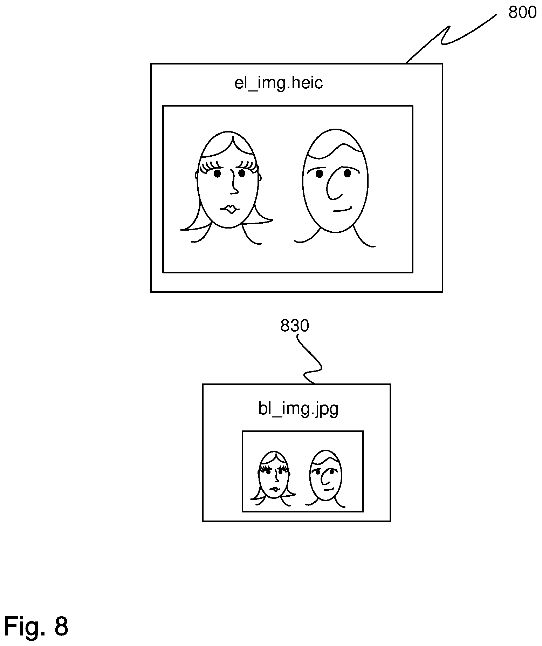

An example shown in Figure 8 illustrates the present examples. . The base-layer image (bl_img.jpg) 830 is stored in a separate file from the enhancement-layer image (el_img.jpg) 800. In order to be able to access the base-layer image 830 for enhancement-layer decoding (in web browsers or alike) and to improve caching, the HTML document includes information that the decoding of the enhancement-layer image 800 depends on the base-layer image 830. Web browsers or alike can therefore request the base-layer image file 830 first, when the enhancement-layer image file 800 is selected for displaying. Furthermore, web browsers can apply progressive refinement in displaying, i.e. first the base-layer image 830, followed by the enhancement-layer image 800 as soon as that has been downloaded and decoded.

```
          <picture>
                <source type="image/heic; src="el_img.heic" />
                <img src="bl_img.jpg" alt="Fallback text" />
                <!-Indication of dependency to be added according to any embodiment -
                ->
          </picture>
```

As mentioned, in an example, the information being included comprises information on that a first image container file and a second image container file are alternatives; information on that the second image container file depends on the first image container file; and on that when intending to display the second image container file, the first image container file can be displayed first. According to further examples this feature has alternatives. These alternatives may comprise one or more (in any combination) of the following:
1) The image candidate string of HTML 5 may be extended to contain a dependency descriptor. The dependency descriptor may be specified as a valid non-empty URL that follows the first valid non-empty URL of the image candidate string. Zero or more dependency descriptors may be present in an image candidate string. Each dependency descriptor specifies a resources on which the decoding of the image identified by the first non-empty URL of the image candidate string depends.
2) A new attribute, referred here to as the dependee attribute, may be specified for the source element included in the picture element of HTML 5. The dependee attribute may include an identification, such as a valid non-empty URL, of the image file or resources on which each image included in the sources set defined in the source element depends on. The dependee attribute can be used for example when the same JPEG image is used as the base layer for several HEVC enhancement-layer bitstreams, each e.g. with different picture quality, resolution, bit-depths, and/or color gamut.
3) The base-layer image may be included as a link in an HTML page in addition to including it within a picture element in the same HTML page. The link contains a prefetch link type, i.e. the attribute rel="prefetch". This indicates to the user agent (i.e. web browser) that the target is an external resource (rather than a hyperlink) and that the external resource is to be pre-fetched. Consequently, if the web browser chose an enhancement-layer file from the picture element, the required base-layer image would be automatically received. A HEIF enhancement-layer file may contain an external data reference (e.g. in DataReferenceBox) to the base-layer file. This embodiment may operate efficiently only if there is a single base-layer image per each picture element that is always required regardless of which alternative image the web browser chooses from the picture element.
4) In case an image is not embedded into an HTML page, but rather linked to the page, one or more new link types of HTML may be defined. For example, rel="base" may be used to indicate a base-layer image that may be required for decoding another image within the same HTML document. rel="enhancement" may be used to indicate an enhancement-layer image that may require an image in the same HTML document having a link type rel="base" for decoding. As an example: 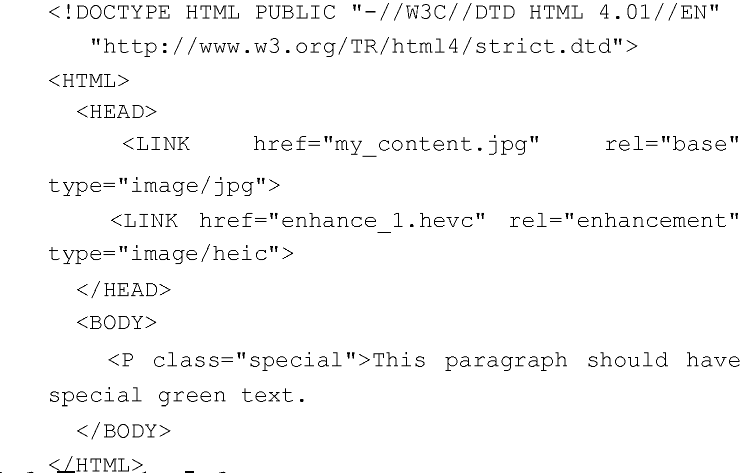 This example may be used together with HTTP redirection as follows: The HTML 5 document contains embedded images (e.g. within the picture element), including an enhancement-layer file (that does not contain the base-layer picture). When the web browsers send an HTTP GET request to the web server, the web server responds with a redirection status code, such as 301 (Moved Permanently), and in the response gives a URL for an HTML page containing external reference links to both the base-layer file and the enhancement-layer file. The HTML page can be for example similar to the example HTML page above. The client then request that HTML page with an HTTP GET requests and parses the received HTML page, resulting into HTTP GET requests of both the base-layer file and the enhancement-layer file.
5) A new optional MIME parameter, referred here to as dependee-file, may be specified for a container file format, such as HEIF. This parameter may include an identification, such as a file name or a URI, of the file(s) that are externally referenced (e.g. in a DataReferenceBox) or on which the present file depends on. In some cases, only the file(s) on which the cover image of a HEIF file depends on are indicated in the value of the dependee-file parameter.
6) A format based on multipart MIME, as specified in IETF RFC 2046, may be defined, where each part may represent a file containing one layer. The multipart MIME message, without the data for the coded images, may be included inline in the HTML page or alike, enabling the web browser to parse information about the parts of the multipart MIME message. Alternatively, the HTML page or alike may contain a link with the prefetch link type to the MIME multipart message, guiding the web browser and proxy cache to prefetch the MIME multipart message and enabling its parsing prior to the selection of the enhancement-layer picture for displaying.
   The "alternative" subtype may be used for the multipart MIME message to indicate that the parts are alternatives to each other, when it comes to displaying.
   When the format is used in an HTML page or alike, the base-layer file is advantageously not contained in the multipart MIME message, but is included by reference through the external-body mechanism of the multipart MIME syntax. The value of the external-body subtype includes the identification of the base-layer file, such as a file name. This identification can be converted to a URL and hence requested by a web browser. Similarly, when the format is used in an HTML page or alike, the enhancement-layer file is advantageously not contained in the multipart MIME message, but is included by reference through the external-body mechanism of the multipart MIME syntax, enabling to keep the HTML code or alike short.

In an example which may be used together with or independently of other examples, , an inter-layer predicted image item may be stored in a HEIF file or alike for example as follows. A predicted layer is encoded or otherwise obtained, wherein the predicted layer comprises a second picture, where the second picture uses or at least may use the first picture as a reference for inter-layer prediction. The first picture is encapsulated in a first file, and the second picture is encapsulated in a second file, conforming to HEIF or alike format, as a second image item. An external data reference is included in the second file (e.g. using the DataReferenceBox of ISOBMFF), pointing to the first file. A first image item is included in the second file, wherein the first image item includes the first picture by referencing to said external data reference. In other words, the coded data bytes of the first picture are not copied into the second file, but rather the coded data bytes are referred to by the second file. A specific item reference (here referred to as 'ilrf) is included into the second file to indicate that there is or may be inter-layer prediction from the first image item to the second image item, wherein the direction for the item reference may be e.g. from the second image item to the first image item. Direct reference image items for a specific image item may be defined as those image items that are linked to the specific image item by the 'ilrf item reference, and indirect reference image items for a specific image item may be defined as those image items that are not linked to the specific image item by the 'ilrf item reference but are direct or indirect reference image items of a direct reference image item of the specific image item. Additionally, zero or more of the following properties may be indicated in the second file:
- at least one OLS index for the second image item, wherein the at least one OLS index may be required to refer to such OLS in which the predicted layer (containing the second picture) is an output layer and all the direct and indirect reference pictures of the second picture are included (potentially by reference) in the second file as direct and indirect reference image items of the second image item;
- at least one profile-tier-level structure or alike that applies to the at least one OLS that is indicated (through the at least on OLS index) or inferred to apply to the second image item.

In an example which may be used together with or independently of other examples, a predicted layer is encoded or otherwise obtained, wherein the predicted layer comprises a second picture, where the second picture uses or at least may use the first picture as a reference for inter-layer prediction. The first picture is encapsulated in a first file, and the second picture is encapsulated in a second file, conforming to HEIF or alike format, as a second image item. An external data reference is included in the second file (e.g. using the DataReferenceBox of ISOBMFF), pointing to the first file. More than one coded picture of different layers may be stored into or referred to by a same image item. More than one coded picture may be stored into or referred to by an item having multiple layers only when the item represents an OLS with one output layer (and hence one output picture). This makes it unambiguous which output picture is referred, when the item is used as input to a derived image. Each coded picture in an item comprising multiple coded pictures may be enclosed in its own extent and the same coded picture may be included in multiple items using extents. An extent may be associated with an external data reference. Here, a first image item is included in the second file, the first image item is indicated to comprise a first extent and a second extent, and the first image item is indicated to include the first picture by reference to the first file (using the external data reference) in the first extent and the second picture in the second extent. Additionally, zero or more of the following properties may be indicated in the file:
- at least one OLS index for the second image item, wherein the at least one OLS index may be required to refer to such OLS in which the predicted layer (containing the second picture) is an output layer and all the direct and indirect reference pictures of the second picture are included (potentially by reference) in the second image item;
- at least one profile-tier-level structure or alike that applies to the at least one OLS that is indicated (through the at least on OLS index) or inferred to apply to the second image item.

In an example which may be used together with or independently of other examples, a second picture may be parsed, e.g. by a file player, from a second file (such as a HEIF file or alike) for example as follows, when the second picture resides on a predicted layer, where the second picture uses or at least may use a first picture as a reference for inter-layer prediction, and the first picture resides in a first file. An external data reference is parsed from the second file (e.g. using the DataReferenceBox of ISOBMFF), pointing to the first file. A first image item is parsed from the second file, wherein the first image item includes the first picture by referencing to said external data reference. A specific item reference (here referred to as 'ilrf) is parsed from the file, indicating that a second image item is, or at least may be, inter-layer predicted from the first image item. A decoded first picture is obtained; e.g. it might have been decoded already earlier on the basis of other embodiments. A second image item including the second picture is decapsulated from the file and may be decoded. In some cases, at least one OLS index for the second image item may be parsed from the file, wherein the at least one OLS index may be required to refer to such OLS in which the predicted layer (containing the second picture) is an output layer and all the direct and indirect reference pictures of the second picture are included in the file (potentially by reference) as direct and indirect reference image items of the second image item. One of the at least one OLS index may be provided for decoding the second picture.

In an example which may be used together with or independently of other examples, a second picture may be parsed, e.g. by a file player, from a second file (such as a HEIF file or alike) for example as follows, when the second picture resides on a predicted layer, where the second picture uses or at least may use a first picture as a reference for inter-layer prediction, and the first picture resides in a first file. An external data reference is parsed from the second file (e.g. using the DataReferenceBox of ISOBMFF), pointing to the first file. An image item is parsed from the second file, wherein the first image item includes the first picture as a first extent by referencing to said external data reference and the second picture as a second extent. A decoded first picture is obtained; e.g. it might have been decoded already earlier on the basis of other embodiments. The second picture is decapsulated from the file and may be decoded. In some cases, at least one OLS index for the image item may be parsed from the file, wherein the at least one OLS index may be required to refer to such OLS in which the predicted layer (containing the second picture) is an output layer and all the direct and indirect reference pictures of the second picture are included in the file (potentially by reference) as direct and indirect reference image items of the second image item. One of the at least one OLS index may be provided for decoding the second picture.

According to an example, a server-side file arrangement has alternatives. It is noted that when a URI or URL is referred to above, that URI or URL may also contain the query and fragment (i.e. URL form) parts. Hence, a single file (in a server) may actually contain multiple images and a URL form (in an HTML page or alike) may be used to address which image within the file is pointed to. This approach is asserted to have similar caching benefits compared to using separate files, but may not be well applicable to the case where the base-layer image uses different file format (e.g. JPEG) compared to the enhancement-layer file (e.g. HEVC image file). In such case, a legacy JPEG parser might not be able to parse a JPEG image encapsulated within a HEVC image file, and hence an approach using separate files may be preferred.

In another approach, a single file (in the server) contains multiple images, such as the base-layer image and the enhancement-layer image. The HTML page or alike uses a first URI without the fragment part to refer to the base-layer image (e.g. a JPEG image that has been encapsulated within a HEIF file) and another URI to refer to the single file containing both images. The server also has metadata, such as a server-side script, to interpret the first URI as the base layer image and, if needed, generate a valid file from the base-layer image e.g. by attaching header fields. This approach is asserted to reduce storage space in the server but may not have caching benefits.

It is noted that any type of scalability and scalable coding may be used with the present embodiments, comprising e.g. SNR scalability (picture quality scalability), spatial scalability, bit-depth scalability, color gamut scalability, dynamic range scalability, region-of-interest scalability, view scalability (e.g. from monoscopic to stereoscopic), depth scalability (e.g. enhancing a color image with the respective depth map).

In multi-layer HEVC extensions, the codec profile is provided layer-wise. For example, it may be indicated that a particular layer conforms to the Multiview Main profile of HEVC. The codec profile may be given as an optional MIME parameter.

However, the codec profile does not necessarily indicate which type of a layer is in question. For example, the Multiview Main profile can be assigned to both texture and depth view.

According to an example, information indicative of the scalability type(s) or dimension(s) of an item containing one non-base layer are included in a description of the file. For example, one or more of the following approaches may be used: i) an amendment to the "metaitem" list item of the codecs MIME parameter or a new optional MIM type parameter, which may be linked to a "metaitem" list item, e.g. through an index. In both cases, the syntax may include e.g. one or more of the following: a) a list of scalability dimension(s) used in the layer, e.g. "Dep", "View", "Aux" indicating that the layer has a DependencyId, ViewOrderIdx, and AuxId (of HEVC) different from those of the base layer; b) Value(s) of the scalability identifier(s), e.g. values of DependencyId, ViewOrderIdx, and AuxId. If the list of scalability dimension(s) used in the layer is given, the values may be given only for those scalability dimension(s) that are in use; ii) an HTML link type indicating a scalability dimension used in the layer, e.g. rel="Dep", rel="View", and/or rel="Aux".

According to an example, a web browser or alike parses the information indicative of the scalability type(s) or dimension(s) of an item containing one non-base layer may be included in a description or the file. Consequently, it can conclude which type of progressive refinement the item and the file can provide. The web browser may choose to request only those files (entirely) or items (within files, using URL forms) that suit its displaying environment. For example, when a 2D display is in use, a non-base view layer and/or depth auxiliary layer may be considered unnecessary. Similarly, if a regular (low dynamic range) display is in use, a layer providing dynamic range enhancement may be considered unnecessary.

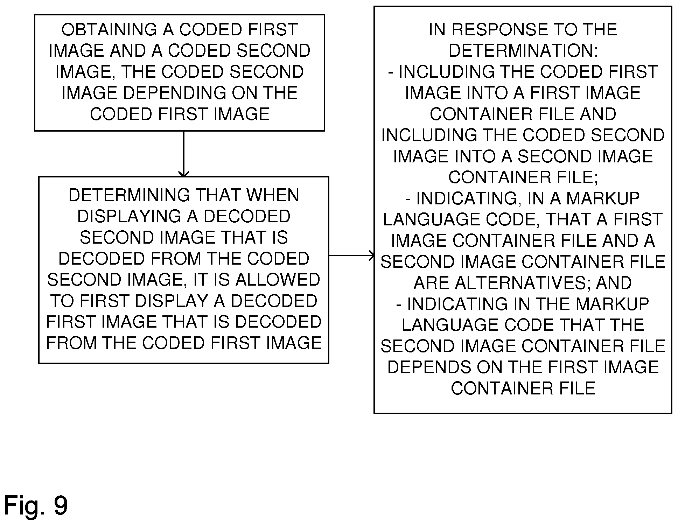

An example of a method is illustrated as a flowchart in Figure 9. The method comprises obtaining a coded first image and a coded second image, wherein the coded second image depends on the coded first image: determining that, when displaying a decoded second image that is decoded from the coded second image, it is allowed to first display a decoded first image that is decoded from the coded first image; and in response to said determination: including the coded first image into a first image container file and including the coded second image into a second image container file; indicating, in a markup language code, that a first image container file and a second image container file are alternatives; and indicating, in the markup language code, that the second image container file depends on the first image container file.

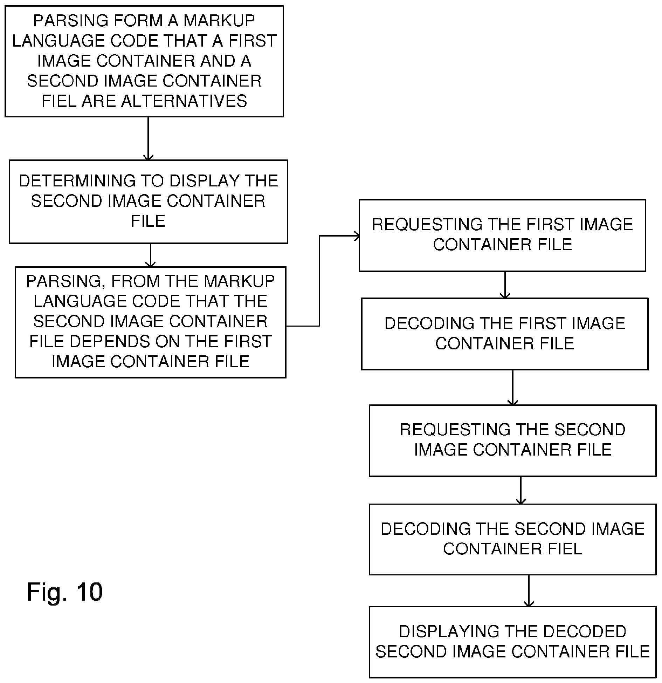

Another example of a method is illustrated as a flowchart in Figure 10. The method comprises parsing, from a markup language code, that a first image container file and a second image container file are alternatives; determining to display the second image container file; parsing, from the markup language code, that the second image container file depends on the first image container file; requesting the first image container file; decoding the first image container file; requesting the second image container file; decoding the second image container file; and displaying the decoded second image container file.

The various examples provide advantages. When compared to the case where an image container file contains all layers of a scalably coded image and additionally the base-layer image is provided as a separate resource, the examples are asserted to provide the following advantages. For example, the storage space in the origin server and in caches is reduced as the base-layer is presented only once (instead of the dual storage in the reference case). Further, the cache hit rate for the base-layer image is improved due to the fact that all clients request at least the base-layer image (with its distinct URI). The cache hit rate helps improving the access time of the base-layer image and hence may be perceived as faster response times in displaying a web page or such. In addition, hybrid codec scalability does not require specification of an encapsulation format of a layer of one format to a container format of another layer. For example, there is no need for specifying a JPEG encapsulation for HEIF for the case where a JPEG image is used as the base layer for an SHVC image.

The examples also facilitates progressive refinement of scalable coded images that can be controlled by the web browser or alike. Earlier solutions controllable by the web browser have required the use of single-layer coding or have included all layers of a scalably coded image into the same file. Consequently, the storage space requirement has been greater in both cases and the cache hit rate for the lower resolution/quality may be worse than with the present embodiments.

Furthermore, when downloading and displaying images in a progressive refinement mode, the earlier solutions using single-layer images require transmission of a greater byte count and hence have reproduce the final image more slowly on the web browser. In other words, so-called simulcast coding of an image may have a worse rate-distortion performance than the respective scalable coding of an image.

In the above, some examples have been described by using the phrase "depend on" when characterizing the relation of coded images, e.g. the second image depends on the first image. It needs to be understood that the phrase "depend on" may indicate, but is not limited to, one or more of the following: the first image is used as a reference for prediction of the second image, wherein the prediction may be e.g. inter-layer prediction; the first image resides on a reference layer of the predicted layer that contains the second image; the first image may be used as a reference for prediction of the second image, e.g. the first image is included, e.g. by a decoding process, in a reference picture set and/or a reference picture list from which the reference picture(s) of used for predicting the second image are selected; the first image contains information that is necessary for decoding the second image.

In the above, some examples have been described in relation to ISOBMFF and/or HEIF. It needs to be understood that examples could be similarly realized with any other file format, such as Matroska.

In the above, some examples have been described in relation to HTML 5. It needs to be understood that examples could be similarly realized with any version of HTML or any other language similar to HTML.

In the above some examples have been described in relation to MIME types, It needs to be understood that examples could be similarly realized with other media description schemes.

In the above, some examples have been described in relation to a player or a user agent or a web browser. It needs to be understood that other terms could be interchangeably used, such as reader, parser, or client. It needs to be understood that a player can but needs not be a standalone application. A player can be embedded for example in a web browser.

The various examples of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an example. .

It is obvious that the present invention is not limited solely to the above-presented examples, but it can be modified within the scope of the appended claims.

## Claims

1. A method for providing for a progressive refinement of a scalable image content of a high efficiency file format (HEIF) (700) comprising:
- obtaining a coded base layer image (720) of the scalable image and a coded enhancement layer image (710) of the scalable image, wherein the coded enhancement layer image depends on the coded base layer image;
- determining that, in the case that a decoded enhancement layer image is to be displayed, a decoded base layer image can be displayed first; and in response to
said determination:
indicating, in the HTML 5 code, that in the case of the second HEIF container file is to be displayed, the base layer image of the first HEIF container file can be displayed prior to the enhancement layer image of the second HEIF container file to achieve progressive refinement;
including the coded base layer image (830) into a first HEIF container file and including the coded enhancement layer image into a second HEIF container file (800), wherein the method is **characterized in that** the response to said determination further comprises;
indicating, in a hyper-text markup language (HTML 5) code, that the first HEIF container file and the second HEIF container file are alternatives; and
indicating, in the HTML 5 code, that the second HEIF container file depends on the first HEIF container file.

2. A method for displaying of a progressive refinement of a scalable image content of a high efficiency file format (HEIF) comprising:
- parsing, from a hyper-text markup language (HTML 5) code, that a first HEIF container file and a second HEIF container file are alternatives;
- determining to display the second HEIF container file;
- parsing, from the HTML 5 code, that the second HEIF container file depends on the first HEIF container file;
- parsing, from the HTML 5 code, that in the case an enhancement image from the second HEIF container file is to be displayed, a base layer image from the first HEIF container file is displayed prior to the displaying of the enhancement image;
- requesting the first HEIF container file;
- decoding a base layer image (830) from the first HEIF container file;
- requesting the second HEIF container file (800);
- decoding an enhancement layer image from the second HEIF container file (800);
- displaying the decoded base layer image from the first HEIF container file prior to displaying the decoded enhancement layer image from the second HEIF container file; and
- displaying the decoded enhancement layer image from the second HEIF container file.

3. An apparatus for providing for a progressive refinement of a scalable image content of a high efficiency file format (HEIF) (700) comprising:
- means for obtaining a coded base layer image (720) of the scalable image and a coded enhancement layer image (710) of the scalable image, wherein the coded enhancement layer image depends on the coded base layer image;
- means for determining that, in the case that a decoded enhancement layer image is to be displayed, a decoded base layer image can be displayed first; and
- in response to said determination:
means for indicating, in the HTML 5 code, that in the case of the second HEIF container file is to be displayed, the base layer image of the first HEIF container file can be displayed prior to the enhancement layer image of the second HEIF container file to achieve progressive refinement;
means for including the coded base layer image (830) into a first HEIF container file and including the coded enhancement layer image into a second HEIF container file (800), wherein the apparatus is **characterized in that** the response to said determination further comprises;
means for indicating, in a hyper-text markup language (HTML 5) code, that the first HEIF container file and the second HEIF container file are alternatives; and
means for indicating, in the HTML 5 code, that the second HEIF container file depends on the first HEIF container file.

4. An apparatus for displaying of a progressive refinement of a scalable image content of a high efficiency file format (HEIF) comprising:
- means for parsing, from a hyper-text markup language (HTML 5) code, that a first HEIF container file and a second HEIF container file are alternatives;
- means for determining to display the second HEIF container file;
- means for parsing, from the HTML 5 code, that the second HEIF container file depends on the first HEIF container file;
- means for parsing, from the HTML 5 code, that in the case an enhancement image from the second HEIF container file is to be displayed, a base layer image from the first HEIF container file is displayed prior to the displaying of the enhancement image;
- means for requesting the first HEIF container file;
- means for decoding a base layer image (830) from the first HEIF container file;
- means for requesting the second HEIF container file (800);
- means for decoding an enhancement layer image from the second HEIF container file (800);
- means for displaying the decoded base layer image from the first HEIF container file prior to displaying the decoded enhancement layer image from the second HEIF container file; and
- means for displaying the decoded enhancement layer image from the second HEIF container file.

5. A computer program product for providing for a progressive refinement of a scalable image content of a high efficiency file format (HEIF) (700) embodied on a nontransitory computer readable medium, comprising computer program code configured to, when executed on at least one processor, cause an apparatus or a system to:
- to obtain a coded base layer image (720) of the scalable image and a coded enhancement layer image (710) of the scalable image, wherein the coded enhancement layer image depends on the coded base layer image;
- to determine that, in the case that a decoded enhancement layer image is to be displayed, a decoded base layer image can be displayed first;; and
- in response to said determination:
to indicate, in the HTML 5 code, that in the case of the second HEIF container file is to be displayed, the base layer image of the first HEIF container file can be displayed prior to the enhancement layer image of the second HEIF container file to achieve progressive refinement;
to include the coded base layer image (830) into a first HEIF container file and including the coded enhancement layer image into a second HEIF container file (800), wherein the computer program product is **characterized in that** the response to said determination further comprises;
to indicate, in a hyper-text markup language (HTML 5) code, that the first HEIF container file and the second HEIF container file are alternatives; and
to indicate, in the HTML 5 code, that the second HEIF container file depends on the first HEIF container file.

## Patentansprüche

1. Verfahren zum Bereitstellen einer progressiven Verfeinerung eines skalierbaren Bildinhalts eines hocheffizienten Dateiformats (HEIF) (700), das Folgendes umfasst:
- Erhalten eines codierten Basisschichtbildes (720) des skalierbaren Bildes und eines codierten Verbesserungsschichtbildes (710) des skalierbaren Bildes, wobei das codierte Verbesserungsschichtbild vom codierten Basisschichtbild abhängig ist;
- Bestimmen, dass in dem Fall, in dem ein decodiertes Verbesserungsschichtbild angezeigt werden soll, ein decodiertes Basisschichtbild zuerst angezeigt werden kann; und
in Reaktion auf die Bestimmung:
Anzeigen im HTML-5-Code, dass in dem Fall, in dem die zweite HEIF-Containerdatei angezeigt werden soll, das Basisschichtbild der ersten HEIF-Containerdatei vor dem Verbesserungsschichtbild der zweiten HEIF-Containerdatei angezeigt werden kann, um eine progressive Verfeinerung zu erreichen;
Einbinden des codierten Basisschichtbildes (830) in eine erste HEIF-Containerdatei und Einbinden des codierten Verbesserungsschichtbildes in eine zweite HEIF-Containerdatei (800), wobei das Verfahren **dadurch gekennzeichnet ist, dass** die Reaktion auf die Bestimmung ferner Folgendes umfasst;
Anzeigen in einem Hypertextauszeichnungssprache(HTML-5)-Code, dass die erste HEIF-Containerdatei und die zweite HEIF-Containerdatei Alternativen sind; und
Anzeigen im HTML-5-Code, dass die zweite HEIF-Containerdatei von der ersten HEIF-Containerdatei abhängig ist.

2. Verfahren zum Anzeigen einer progressiven Verfeinerung eines skalierbaren Bildinhalts eines hocheffizienten Dateiformats (HEIF), das Folgendes umfasst:
- Parsen aus einem Hypertextauszeichnungssprache(HTML-5)-Code, dass eine erste HEIF-Containerdatei und eine zweite HEIF-Containerdatei Alternativen sind;
- Bestimmen, dass die zweite HEIF-Containerdatei angezeigt wird;
- Parsen aus dem HTML-5-Code, dass die zweite HEIF-Containerdatei von der ersten HEIF-Containerdatei abhängig ist;
- Parsen aus dem HTML-5-Code, dass in dem Fall, in dem ein Verbesserungsbild aus der zweiten HEIF-Containerdatei angezeigt werden soll, ein Basisschichtbild aus der ersten HEIF-Containerdatei angezeigt wird, bevor das Verbesserungsbild angezeigt wird;
- Anfordern der ersten HEIF-Containerdatei;
- Decodieren eines Basisschichtbildes (830) aus der ersten HEIF-Containerdatei;
- Anfordern der zweiten HEIF-Containerdatei (800);
- Decodieren eines Verbesserungsschichtbildes aus der zweiten HEIF-Containerdatei (800);
- Anzeigen des decodierten Basisschichtbildes aus der ersten HEIF-Containerdatei vor dem Anzeigen des decodierten Verbesserungsschichtbildes aus der zweiten HEIF-Containerdatei; und
- Anzeigen des decodierten Verbesserungsschichtbildes aus der zweiten HEIF-Containerdatei.

3. Vorrichtung zum Bereitstellen einer progressiven Verfeinerung eines skalierbaren Bildinhalts eines hocheffizienten Dateiformats (HEIF) (700), die Folgendes umfasst:
- Mittel zum Erhalten eines codierten Basisschichtbildes (720) des skalierbaren Bildes und eines codierten Verbesserungsschichtbildes (710) des skalierbaren Bildes, wobei das codierte Verbesserungsschichtbild vom codierten Basisschichtbild abhängig ist;
- Mittel zum Bestimmen, dass in dem Fall, in dem ein decodiertes Verbesserungsschichtbild angezeigt werden soll, ein decodiertes Basisschichtbild zuerst angezeigt werden kann; und
- in Reaktion auf die Bestimmung:
Mittel zum Anzeigen im HTML-5-Code, dass in dem Fall, in dem die zweite HEIF-Containerdatei angezeigt werden soll, das Basisschichtbild der ersten HEIF-Containerdatei vor dem Verbesserungsschichtbild der zweiten HEIF-Containerdatei angezeigt werden kann, um eine progressive Verfeinerung zu erreichen;
Mittel zum Einbinden des codierten Basisschichtbildes (830) in eine erste HEIF-Containerdatei und Einbinden des codierten Verbesserungsschichtbildes in eine zweite HEIF-Containerdatei (800), wobei die Vorrichtung **dadurch gekennzeichnet ist, dass** die Reaktion auf die Bestimmung ferner Folgendes umfasst;
Mittel zum Anzeigen in einem Hypertextauszeichnungssprache(HTML-5)-Code, dass die erste HEIF-Containerdatei und die zweite HEIF-Containerdatei Alternativen sind; und
Mittel zum Anzeigen im HTML-5-Code, dass die zweite HEIF-Containerdatei von der ersten HEIF-Containerdatei abhängig ist.

4. Vorrichtung zum Anzeigen einer progressiven Verfeinerung eines skalierbaren Bildinhalts eines hocheffizienten Dateiformats (HEIF), die Folgendes umfasst:
- Mittel zum Parsen aus einem Hypertextauszeichnungssprache(HTML-5)-Code, dass eine erste HEIF-Containerdatei und eine zweite HEIF-Containerdatei Alternativen sind;
- Mittel zum Bestimmen, dass die zweite HEIF-Containerdatei angezeigt wird;
- Mittel zum Parsen aus dem HTML-5-Code, dass die zweite HEIF-Containerdatei von der ersten HEIF-Containerdatei abhängig ist;
- Mittel zum Parsen aus dem HTML-5-Code, dass in dem Fall, in dem ein Verbesserungsbild aus der zweiten HEIF-Containerdatei angezeigt werden soll, ein Basisschichtbild aus der ersten HEIF-Containerdatei angezeigt wird, bevor das Verbesserungsbild angezeigt wird;
- Mittel zum Anfordern der ersten HEIF-Containerdatei;
- Mittel zum Decodieren eines Basisschichtbildes (830) aus der ersten HEIF-Containerdatei;
- Mittel zum Anfordern der zweiten HEIF-Containerdatei (800);
- Mittel zum Decodieren eines Verbesserungsschichtbildes aus der zweiten HEIF-Containerdatei (800);
- Mittel zum Anzeigen des decodierten Basisschichtbildes aus der ersten HEIF-Containerdatei vor dem Anzeigen des decodierten Verbesserungsschichtbildes aus der zweiten HEIF-Containerdatei; und
- Mittel zum Anzeigen des decodierten Verbesserungsschichtbildes aus der zweiten HEIF-Containerdatei.

5. Computerprogrammprodukt zum Bereitstellen einer progressiven Verfeinerung eines skalierbaren Bildinhalts eines hocheffizienten Dateiformats (HEIF) (700), das sich auf einem nichttransitorischen computerlesbaren Medium befindet, das einen Computerprogrammcode umfasst, der dazu ausgelegt ist, wenn er auf mindestens einem Prozessor ausgeführt wird, eine Vorrichtung oder ein System zu Folgendem zu veranlassen:
- Erhalten eines codierten Basisschichtbildes (720) des skalierbaren Bildes und eines codierten Verbesserungsschichtbildes (710) des skalierbaren Bildes, wobei das codierte Verbesserungsschichtbild vom codierten Basisschichtbild abhängig ist;
- Bestimmen, dass in dem Fall, in dem ein decodiertes Verbesserungsschichtbild angezeigt werden soll, ein decodiertes Basisschichtbild zuerst angezeigt werden kann; und
- in Reaktion auf die Bestimmung:
Anzeigen im HTML-5-Code, dass in dem Fall, in dem die zweite HEIF-Containerdatei angezeigt werden soll, das Basisschichtbild der ersten HEIF-Containerdatei vor dem Verbesserungsschichtbild der zweiten HEIF-Containerdatei angezeigt werden kann, um eine progressive Verfeinerung zu erreichen;
Einbinden des codierten Basisschichtbildes (830) in eine erste HEIF-Containerdatei und Einbinden des codierten Verbesserungsschichtbildes in eine zweite HEIF-Containerdatei (800), wobei das Computerprogrammprodukt **dadurch gekennzeichnet ist, dass** die Reaktion auf die Bestimmung ferner Folgendes umfasst;
Anzeigen in einem Hypertextauszeichnungssprache(HTML-5)-Code, dass die erste HEIF-Containerdatei und die zweite HEIF-Containerdatei Alternativen sind; und
Anzeigen im HTML-5-Code, dass die zweite HEIF-Containerdatei von der ersten HEIF-Containerdatei abhängig ist.

## Revendications

1. Procédé pour assurer un perfectionnement progressif d'un contenu d'image échelonnable d'un format de fichier à haute efficacité (HEIF) (700) comprenant les étapes consistant à :
- obtenir une image de couche de base codée (720) de l'image échelonnable et une image de couche d'amélioration codée (710) de l'image échelonnable, dans lequel l'image de couche d'amélioration codée dépend de l'image de couche de base codée ;
- déterminer que dans le cas où une image de couche d'amélioration décodée doit être affichée, une image de couche de base décodée peut être affichée en premier ; et en réponse à ladite détermination :
indiquer dans le code HTML 5 que dans le cas où le deuxième fichier conteneur de HEIF doit être affiché, l'image de couche de base du premier fichier conteneur de HEIF peut être affichée avant l'image de couche d'amélioration du deuxième fichier conteneur de HEIF pour accomplir un perfectionnement progressif ;
inclure l'image de couche de base codée (830) dans un premier fichier conteneur de HEIF et inclure l'image de couche d'amélioration codée dans un deuxième fichier conteneur de HEIF (800), dans lequel le procédé est **caractérisé en ce que** la réponse à ladite détermination comprend en outre les étapes consistant à :
indiquer dans un code de langage de balisage hypertexte (HTML 5) que le premier fichier conteneur de HEIF et le deuxième fichier conteneur de HEIF constituent des alternatives ; et
indiquer dans le code HTML 5 que le deuxième fichier conteneur de HEIF dépend du premier fichier conteneur de HEIF.

2. Procédé d'affichage d'un perfectionnement progressif d'un contenu d'image échelonnable d'un format de fichier à haute efficacité (HEIF) comprenant les étapes consistant à :
- effectuer une analyse syntaxique à partir d'un code de langage de balisage hypertexte (HTML 5) selon laquelle un premier fichier conteneur de HEIF et un deuxième fichier conteneur de HEIF constituent des alternatives ;
- déterminer d'afficher le deuxième fichier conteneur de HEIF ;
- effectuer une analyse syntaxique à partir du code HTML 5 selon laquelle le deuxième fichier conteneur de HEIF dépend du premier fichier conteneur de HEIF ;
- effectuer une analyse syntaxique à partir du code HTML 5 selon laquelle, dans le cas où une image d'amélioration provenant du deuxième fichier conteneur de HEIF doit être affichée, une image de couche de base provenant du premier fichier conteneur de HEIF est affichée avant l'affichage de l'image d'amélioration ;
- demander le premier fichier conteneur de HEIF ;
- décoder une image de couche de base (830) provenant du premier fichier conteneur de HEIF ;
- demander le deuxième fichier conteneur de HEIF (800) ;
- décoder une image de couche d'amélioration provenant du deuxième fichier conteneur de HEIF (800) ;
- afficher l'image de couche de base décodée provenant du premier fichier conteneur de HEIF avant l'affichage de l'image de couche d'amélioration décodée provenant du deuxième fichier conteneur de HEIF ; et
- afficher l'image de couche d'amélioration décodée provenant du deuxième fichier conteneur de HEIF.

3. Appareil pour assurer un perfectionnement progressif d'un contenu d'image échelonnable d'un format de fichier à haute efficacité (HEIF) (700) comprenant :
- des moyens pour obtenir une image de couche de base codée (720) de l'image échelonnable et une image de couche d'amélioration codée (710) de l'image échelonnable, dans lequel l'image de couche d'amélioration codée dépend de l'image de couche de base codée ;
- des moyens pour déterminer que dans le cas où une image de couche d'amélioration décodée doit être affichée, une image de couche de base décodée peut être affichée en premier ; et
- en réponse à ladite détermination :
des moyens pour indiquer dans le code HTML 5 que dans le cas où le deuxième fichier conteneur de HEIF doit être affiché, l'image de couche de base du premier fichier conteneur de HEIF peut être affichée avant l'image de couche d'amélioration du deuxième fichier conteneur de HEIF pour accomplir un perfectionnement progressif ;
des moyens pour inclure l'image de couche de base codée (830) dans un premier fichier conteneur de HEIF et inclure l'image de couche d'amélioration codée dans un deuxième fichier conteneur de HEIF (800), dans lequel l'appareil est **caractérisé en ce que** la réponse à ladite détermination comprend en outre :
des moyens pour indiquer dans un code de langage de balisage hypertexte (HTML 5) que le premier fichier conteneur de HEIF et le deuxième fichier conteneur de HEIF constituent des alternatives ; et
des moyens pour indiquer dans le code HTML 5 que le deuxième fichier conteneur de HEIF dépend du premier fichier conteneur de HEIF.

4. Appareil pour afficher un perfectionnement progressif d'un contenu d'image échelonnable d'un format de fichier à haute efficacité (HEIF) comprenant :
- des moyens pour effectuer une analyse syntaxique à partir d'un code de langage de balisage hypertexte (HTML 5) selon laquelle un premier fichier conteneur de HEIF et un deuxième fichier conteneur de HEIF constituent des alternatives ;
- des moyens pour déterminer l'affichage du deuxième fichier conteneur de HEIF ;
- des moyens pour effectuer une analyse syntaxique à partir du code HTML 5 selon laquelle le deuxième fichier conteneur de HEIF dépend du premier fichier conteneur de HEIF ;
- des moyens pour effectuer une analyse syntaxique à partir du code HTML 5 selon laquelle, dans le cas où une image d'amélioration provenant du deuxième fichier conteneur de HEIF doit être affichée, une image de couche de base provenant du premier fichier conteneur de HEIF est affichée avant l'affichage de l'image d'amélioration ;
- des moyens pour demander le premier fichier conteneur de HEIF ;
- des moyens pour décoder une image de couche de base (830) provenant du premier fichier conteneur de HEIF ;
- des moyens pour demander le deuxième fichier conteneur de HEIF (800) ;
- des moyens pour décoder une image de couche d'amélioration provenant du deuxième fichier conteneur de HEIF (800) ;
- des moyens pour afficher l'image de couche de base décodée provenant du premier fichier conteneur de HEIF avant l'affichage de l'image de couche d'amélioration décodée provenant du deuxième fichier conteneur de HEIF ; et
- des moyens pour afficher l'image de couche d'amélioration décodée provenant du deuxième fichier conteneur de HEIF.

5. Produit de programme informatique pour assurer un perfectionnement progressif d'un contenu d'image échelonnable d'un format de fichier à haute efficacité (HEIF) (700) incorporé sur un support non transitoire lisible par ordinateur, comprenant un code de programme informatique configuré pour, lorsqu'il est exécuté sur au moins un processeur, amener un appareil ou un système :
- à obtenir une image de couche de base codée (720) de l'image échelonnable et une image de couche d'amélioration codée (710) de l'image échelonnable, dans lequel l'image de couche d'amélioration codée dépend de l'image de couche de base codée ;
- à déterminer que dans le cas où une image de couche d'amélioration décodée doit être affichée, une image de couche de base décodée peut être affichée en premier ; et
en réponse à ladite détermination :
à indiquer dans le code HTML 5 que dans le cas où le deuxième fichier conteneur de HEIF doit être affiché, l'image de couche de base du premier fichier conteneur de HEIF peut être affichée avant l'image de couche d'amélioration du deuxième fichier conteneur de HEIF pour accomplir un perfectionnement progressif ;
à inclure l'image de couche de base codée (830) dans un premier fichier conteneur de HEIF et à inclure l'image de couche d'amélioration codée dans un deuxième fichier conteneur de HEIF (800), dans lequel le produit de programme informatique est **caractérisé en ce que** la réponse à ladite détermination comprend en outre les étapes consistant :
à indiquer dans un code de langage de balisage hypertexte (HTML 5) que le premier fichier conteneur de HEIF et le deuxième fichier conteneur de HEIF constituent des alternatives ; et
à indiquer dans le code HTML 5 que le deuxième fichier conteneur de HEIF dépend du premier fichier conteneur de HEIF.
